(19) Europäisches Patentamt / European Patent Office / Office européen des brevets

(11) **EP 4 694 501 A1**

(12) **EUROPEAN PATENT APPLICATION**
published in accordance with Art. 153(4) EPC

(43) Date of publication:
**11.02.2026 Bulletin 2026/07**

(21) Application number: **24784134.9**

(22) Date of filing: **27.03.2024**

(51) International Patent Classification (IPC):
**H04W 72/25** (2023.01)

(52) Cooperative Patent Classification (CPC):
**H04W 72/25**

(86) International application number:
**PCT/CN2024/084059**

(87) International publication number:
**WO 2024/208049 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.04.2023 CN 202310384427
12.05.2023 CN 202310541161**

(71) Applicant: **Huawei Technologies Co., Ltd.
Shenzhen, Guangdong 518129 (CN)**

(72) Inventors:
• **QI, Hong**
  **Shenzhen, Guangdong 518129 (CN)**
• **ZHANG, Yi**
  **Shenzhen, Guangdong 518129 (CN)**
• **YI, Feng**
  **Shenzhen, Guangdong 518129 (CN)**
• **SU, Hongjia**
  **Shenzhen, Guangdong 518129 (CN)**

(74) Representative: **Isarpatent
Patent- und Rechtsanwälte Partg mbB
Friedrichstraße 31
80801 München (DE)**

(54) **COMMUNICATION METHOD AND APPARATUS**

(57) This application provides a communication method and apparatus that may be applied to resource sharing in channel occupancy time in sidelink communication. The method includes: A first terminal apparatus determines first channel occupancy time COT. The first terminal apparatus determines to share a first resource based on a preset priority threshold, where a time domain position of the first resource is in the first COT, and a priority of data on the first resource is higher than or equal to the priority threshold. The first terminal apparatus sends first indication information to at least one second terminal apparatus, where the first indication information is for sharing the first COT, and the first indication information includes one or more of the priority threshold, resource information of the first COT, and sharing and licensing information of a PSFCH resource in the first COT. According to the method, COT sharing of an unlicensed spectrum resource can be implemented on a sidelink.

FIG. 15

EP 4 694 501 A1

**Description**

This application claims priorities to Chinese Patent Application No. 202310384427.5, filed with the China National Intellectual Property Administration on April 7, 2023 and entitled "COMMUNICATION METHOD AND APPARATUS", and to Chinese Patent Application No. 202310541161.0, filed with the China National Intellectual Property Administration on May 12, 2023 and entitled "COMMUNICATION METHOD AND APPARATUS", both of which are incorporated herein by reference in their entireties.

**TECHNICAL FIELD**

This application relates to the communication field, and in particular, to a communication method and apparatus.

**BACKGROUND**

Using an unlicensed spectrum can provide an end user with a higher service rate and better user experience. The unlicensed spectrum is shared, that is, any network device that complies with a specific regulation can use the spectrum to receive and send information. For better coexistence of network devices, all the network devices need to use a listen before talk (listen before talk, LBT) mechanism. If specific user equipment obtains a sending opportunity through LBT, a time length for the user equipment corresponding to the sending opportunity to send information is referred to as channel occupancy time (channel occupancy time, COT for short). After obtaining the COT, the user equipment may share a spectrum resource with other user equipment, and send the resource shared in the COT, including a corresponding time domain position and a corresponding frequency domain position, to the other user equipment. After receiving such sharing information and successfully performing listen before talk (LBT), the other user equipment may use a specified frequency domain resource to send information at a specified moment.

User equipment on a sidelink uses a resource after either itself obtains COT through LBT or the resource is shared by UE obtaining COT with the user equipment. However, currently, there is no related design of COT sharing indication information of the unlicensed spectrum resource on the sidelink, and normal implementation of a COT sharing mechanism cannot be ensured.

Therefore, COT sharing needs to be implemented on a sidelink of an unlicensed frequency band according to an additional design.

**SUMMARY**

This application provides a communication method and apparatus. According to the method, COT sharing of an unlicensed spectrum resource can be implemented on a sidelink.

According to a first aspect, a communication method is provided. The method may be performed by a first terminal apparatus, or may be performed by a chip or a circuit configured in the first terminal apparatus. This is not limited in this application. For ease of description, an example in which the method is performed by the first terminal apparatus is used below for description.

The method includes: The first terminal apparatus determines first channel occupancy time COT. The first terminal apparatus determines to share a first resource based on a preset priority threshold, where a time domain position of the first resource is in the first COT, and a priority of data on the first resource is higher than or equal to the priority threshold. The first terminal apparatus sends first indication information to at least one second terminal apparatus, where the first indication information is for sharing the first COT, and the first indication information includes one or more of the priority threshold, resource information of the first COT, and sharing and licensing information of a PSFCH in the first COT.

Alternatively, the method includes: The first terminal apparatus determines first channel occupancy time COT. The first terminal apparatus sends first indication information to at least one second terminal apparatus, where the first indication information is for sharing the first COT, the first indication information includes one or more of a priority threshold, resource information of the first COT, and sharing and licensing information of a PSFCH in the first COT. The priority threshold is for determining a first resource, a time domain position of the first resource is in the first COT, and a priority of data on the first resource is higher than or equal to the priority threshold.

COT sharing may be understood as that the first terminal apparatus indicates, based on sharing indication information, that another terminal can use a resource in the first COT of the first terminal apparatus.

Optionally, the first terminal apparatus may send the first indication information in a 1st slot in the determined first COT.

Optionally, the first terminal apparatus may send the first indication information in each slot in the first COT, and the first indication information may be different. Further, when the first indication information is sent in different slots, the first indication information may be gradually updated.

It should be understood that the first terminal apparatus may determine a shared first terminal apparatus at different protocol layers.

As an example rather than a limitation, the first terminal apparatus may report the priority threshold to a medium access control (Medium Access Control, MAC) layer at a physical layer, so that the MAC layer does not select a time-frequency resource whose priority is higher than the priority threshold when selecting a resource from a resource set SA.

As an example rather than a limitation, when performing resource exclusion, the first terminal apparatus can exclude reserved resources whose priorities are higher than the priority threshold, and report this resource set and the resource set SA to the MAC layer. Finally, the MAC layer selects resources together in a resource selection process, and indicates the physical layer to share the resources with other terminal apparatuses.

It should be understood that the foregoing solution is applicable to multicast and unicast scenarios. This is not limited in this application.

It should be understood that LBT used by a terminal device in a channel access procedure is not limited in this embodiment of this application. For example, a first terminal may access a channel through Type 1 LBT, or through Type 2 LBT (including 2A, 2B, and 2C).

It should be understood that a higher priority indicates a lower corresponding priority value. For example, a priority whose priority value is 1 is higher than a priority whose priority value is 2.

Optionally, the resource information of the first COT includes but is not limited to one or more of a channel access priority CACP, a COT time domain start position, a COT duration, and a position of an RB set included in the COT in frequency domain.

It should be understood that the resource information of the first COT includes information about all or a part of resources in the first COT. This is not limited in this embodiment of this application.

Based on the foregoing solution, after determining the first COT in the channel access procedure, the first terminal apparatus may determine, based on the priority threshold, the first resource that can be shared to the at least one second terminal apparatus in the first COT, and implicitly indicate, by including the priority threshold in the first indication information sent to the second terminal apparatus, which second terminal apparatus can use the shared COT, so that the second terminal apparatus can determine, based on a priority of to-be-sent data of the second terminal apparatus and the priority threshold, whether the shared COT can be used. Compared with a method for indicating a specific location of a time-frequency resource, in this solution, only one priority threshold needs to be indicated, and no additional field overheads are required, to implement COT sharing of an unlicensed spectrum resource.

With reference to the first aspect, in some implementations of the first aspect, before the first terminal apparatus determines the first channel occupancy time COT, the method further includes: The first terminal apparatus receives second indication information from the second terminal apparatus, where the second indication information indicates a second resource, the second resource is a resource reserved by the second terminal apparatus for sending data, a time domain position of the second resource is in the first COT, and the first resource is included in the second resource.

It should be understood that the second resource may be a plurality of resources reserved by one second terminal apparatus, or the second resource may be a plurality of resources reserved by a plurality of second terminal apparatuses. This is not limited in this embodiment of this application.

It should be understood that a part or all of such second resources may be first resources, that is, resources that the first terminal apparatus can share in the first COT with one or more second terminal apparatuses.

It should be understood that resources determined by the second terminal apparatus as resources that can be used may be a part or all of the second resources, that is, the resources that can be used by the second terminal apparatus may be a part or all of the reserved resources.

Based on the foregoing solution, before determining the first COT, the first terminal apparatus further receives the second indication information from the second terminal apparatus, and determines, after preempting the first COT, that the second terminal apparatus reserves the second resource in the first COT, so that the first terminal apparatus can determine, from the second resource based on a priority of to-be-sent data on the second resource reserved by the second terminal apparatus and the priority threshold, the first resource that can be shared to the corresponding second terminal apparatus. This avoids a conflict between a terminal apparatus that reserves a resource and a terminal apparatus that preempts COT, and ensures quick access of high-priority service transmission to a channel, and quality of service (Quality of Service, QoS) of a high-priority service.

With reference to the first aspect, in some implementations of the first aspect, the first indication information includes at least one first identifier, each first identifier is in a one-to-one correspondence with a second terminal apparatus that reserves the first resource, and the first identifier indicates that a resource in the first COT is shared with a corresponding second terminal apparatus.

Optionally, the first identifier may be an Additional ID.

Optionally, the first identifier may be a COT sharing indication ID or a COT sharing indication ID pair.

Optionally, the first identifier may be an Additional ID pair (Additional ID pair). Each Additional ID pair includes both a service ID of the first terminal apparatus and a UE ID of a second terminal apparatus with which a resource is shared, or each Additional ID pair includes both the service ID of the first terminal apparatus and an ID corresponding to a receiving service. The service ID is used by UE with which a resource is shared to determine UE of initial COT to which data is sent on the shared resource.

Based on the foregoing solution, the first indication information sent by the first terminal apparatus to the at least one second terminal apparatus further includes at least one first identifier, and each first identifier corresponds to one second terminal apparatus, and indicates that a resource in the first COT is shared with the second terminal apparatus corresponding to the first identifier, so that the second terminal apparatus receiving the first indication information can determine, based on the first identifier, whether a resource in the first COT can be used.

With reference to the first aspect, in some implementations of the first aspect, a quantity of first identifiers is determined based on a quantity of second terminal apparatuses that reserve the first resource.

Based on the foregoing solution, the first terminal apparatus determines the quantity of first identifiers based on that a priority of to-be-sent data on a resource reserved in the first COT is higher than the priority threshold. This can avoid generating a plurality of first identifiers indicating a same second terminal apparatus, accurately control the quantity of first identifiers, and reduce overheads.

With reference to the first aspect, in some implementations of the first aspect, the sharing and licensing information of the PSFCH in the first COT indicates a third terminal apparatus to use the PSFCH resource in the first COT, the third terminal apparatus is included in the at least one second terminal apparatus, and the third terminal apparatus is at least one of the following: a data receiving apparatus of the first terminal apparatus; a terminal apparatus corresponding to the first identifier; or a data receiving apparatus of the terminal apparatus corresponding to the first identifier.

With reference to the first aspect, in some implementations of the first aspect, the sharing and licensing information of the PSFCH in the first COT is 1-bit and indicates a third terminal apparatus to use the PSFCH resource in the first COT, and the third terminal apparatus is included in the at least one second terminal apparatus. The third terminal apparatus is a data receiving apparatus of the first terminal apparatus, and/or a terminal apparatus corresponding to the first identifier.

With reference to the first aspect, in some implementations of the first aspect, the sharing and licensing information of the PSFCH in the first COT is a plurality of bits, and indicates one of the following: indicating a third terminal apparatus to use the PSFCH resource in the first COT, where the third terminal apparatus is included in the at least one second terminal apparatus, and the third terminal apparatus is a data receiving apparatus of the first terminal apparatus, and/or a terminal apparatus corresponding to the first identifier; indicating a data receiving apparatus of a terminal apparatus corresponding to the first identifier to use the PSFCH resource in the first COT; or indicating that the third terminal apparatus cannot use the PSFCH resource in the first COT.

It should be understood that the third terminal apparatus may be replaced with a responding apparatus (Responding Device), or the third terminal apparatus may be any terminal apparatus that receives the first indication message. This is not limited in this embodiment of this application.

It should be understood that a PSFCH resource that is in the first COT and that is shared by the first terminal apparatus with another terminal apparatus for use may be all or a part of PSFCH resources in the first COT.

It should be understood that a terminal apparatus that is licensed to use a PSFCH resource in the first COT can determine and use, based on sharing and licensing information of the PSFCH and a PSSCH resource used by the terminal apparatus, the PSFCH resource that is licensed for use.

Based on the foregoing solution, the first terminal apparatus can share a PSFCH resource that is in the COT and that is determined by the first terminal apparatus with a specific terminal apparatus, thereby improving resource utilization and improving overall system performance of a sidelink communication system.

With reference to the first aspect, in some implementations of the first aspect, the priority threshold is one of the following: a highest priority in at least one piece of to-be-sent data in the first COT; a lowest priority of to-be-sent data in the first COT; or a priority of data sent in a $1^{st}$ time unit of the first COT.

Optionally, the priority threshold may be configured or preconfigured. For example, the priority threshold is a priority threshold (preconfigured) configured for the first terminal apparatus, or the priority threshold is a priority threshold configured in a resource pool.

Optionally, the priority threshold may be a lowest priority of reserved resources in shared first resources determined by the first terminal apparatus in the first COT.

Based on the foregoing solution, the first terminal apparatus can determine to adjust a COT sharing strategy based on different priority thresholds, thereby improving flexibility of COT sharing.

With reference to the first aspect, in some implementations of the first aspect, the first indication information is carried in sidelink control information SCI, or the first indication information is carried in a medium access control control element MAC CE.

It should be understood that the first indication information may be carried in $1^{st}$-stage SCI, or the first indication information may be carried in $2^{nd}$-stage SCI. This is not limited in this embodiment of this application.

Based on the foregoing solution, the first terminal apparatus may add the first indication information to the SCI or the MAC CE, thereby improving the flexibility of COT sharing.

According to a second aspect, a communication method is provided. The method may be performed by a second terminal apparatus, or may be performed by a chip or a circuit configured in the second terminal apparatus. This is not limited in this application. For ease of description, an example in which the method is performed by the second terminal apparatus is used below for description.

The method includes: The second terminal apparatus receives first indication information from a first terminal apparatus, where the first indication information indicates that first channel occupancy time COT is shared, and the first indication information includes one or more of a priority threshold, resource information of the first channel occupancy time COT, and sharing and licensing information of a PSFCH resource in the first COT. When the first indication information retains a priority threshold, the second terminal apparatus determines to use a third resource based on the priority threshold, where a time domain position of the third resource is in the first COT, and a priority of data on the third resource is higher than or equal to the priority threshold.

Alternatively, the method includes: The second terminal apparatus receives first indication information from a first terminal apparatus, where the first indication information indicates that first channel occupancy time COT is shared, and the first indication information includes one or more of a priority threshold, resource information of the first channel occupancy time COT, and sharing and licensing information of a PSFCH resource in the first COT. The priority threshold is for determining to use a third resource, a time domain position of the third resource is in the first COT, and a priority of data on the third resource is higher than or equal to the priority threshold.

It should be understood that when the first indication information includes the sharing and licensing information of the PSFCH, the second terminal apparatus can determine, based on the sharing and licensing information of the PSFCH, whether the shared PSFCH resource can be used.

It should be understood that a higher priority indicates a lower corresponding priority value. For example, a priority whose priority value is 1 is higher than a priority whose priority value is 2.

Optionally, the resource information of the first COT includes but is not limited to one or more of a channel access priority CACP, a COT time domain start position, a COT duration, and a position of an RB set included in the COT in frequency domain.

It should be understood that the resource information of the first COT includes information about all or a part of resources in the first COT. This is not limited in this embodiment of this application.

It should be understood that the third resource determined by the second terminal apparatus to use is a resource that is determined by the first terminal apparatus to share in the first COT and that is shared with another terminal apparatus based on the first indication information.

It should be understood that, after the second terminal apparatus determines that the third resource in the first COT can be used, the second terminal apparatus can use the third resource according to its own implementation.

Optionally, after a shared time-frequency resource (that is, the third resource) that can be used in the first COT is determined at a physical layer, the second terminal apparatus may directly send a data packet on the time-frequency resource.

Optionally, after a shared time-frequency resource (that is, the third resource) that can be used in the first COT is determined at the physical layer, the second terminal apparatus may report the shared resource to a MAC layer, indicate that the resource is a shared resource, and indicate the MAC layer to perform resource selection.

Optionally, when using the third resource in the first COT, the second terminal apparatus sends data to at least the first terminal apparatus of initial first COT on the third resource.

Optionally, when the first indication information includes the channel access priority class (channel access priority class, CAPC), the second terminal apparatus can use the shared resource only when a channel access priority class CAPC of to-be-transmitted data of the second terminal apparatus is higher than the CAPC indicated in the first indication information.

It should be understood that, after determining the third resource that can be used, the second terminal apparatus further needs to perform Type 2 channel access before using the shared resource, or needs to switch from Type 1 channel access to Type 2 channel access before using the shared resource.

Based on the foregoing solution, the second terminal apparatus can determine the priority of the to-be-sent data of the second terminal apparatus and the priority threshold based on the priority threshold in the first indication information sent by the first terminal apparatus and the priority of the to-be-sent data of the second terminal apparatus, determine whether the shared COT can be used, and determine the third resource that can be used. Compared with a method for indicating a specific location of a time-frequency resource, in this solution, only one priority threshold needs to be indicated, and no additional field overheads are required to implement COT sharing of an unlicensed spectrum resource.

With reference to the second aspect, in some implementations of the second aspect, before the second terminal apparatus device receives the first indication information from the first terminal apparatus device, the method further includes: The second terminal apparatus sends second indication information to the first terminal apparatus, where the second indication information indicates a second resource, the second resource is a resource reserved by the second terminal apparatus for sending data, a time domain position of the second resource is in the first COT, and the third resource is included in the second resource.

It should be understood that the third resource can be a part or all of resources shared by the first terminal apparatus, that is, the first terminal apparatus can share the resources in the first COT with one or more second terminal apparatuses.

It should be understood that third resources determined by the second terminal apparatus as resources that can be used may be a part or all of the second resources, that is, the resources that can be used by the second terminal apparatus may be a part or all of the reserved resources.

Based on the foregoing solution, before receiving the first indication information, the second terminal apparatus sends the second indication information to the first terminal apparatus, so that the first terminal apparatus can determine that the second terminal apparatus reserves the second resource in the first COT, and the first terminal apparatus can determine, from the second resource based on a priority of to-be-sent data on the second resource reserved by the second terminal apparatus and the priority threshold, the third resource that can be shared to the corresponding second terminal apparatus. This avoids a conflict between a terminal apparatus that reserves a resource and a terminal apparatus that preempts COT, and ensures quick access of high-priority service transmission to a channel, and QoS of a high-priority service.

With reference to the second aspect, in some implementations of the second aspect, the first indication information includes a first identifier, and the first identifier indicates that a resource in the first COT is shared with the corresponding second terminal apparatus.

Optionally, the first identifier may be an Additional ID.

Optionally, the first identifier may alternatively be a COT sharing indication ID or a COT sharing indication ID pair.

Optionally, the first identifier may be an Additional ID pair (Additional ID pair). Each Additional ID pair includes both a service ID of the first terminal apparatus and a UE ID of the second terminal apparatus with which a resource is shared, or each Additional ID pair includes both the service ID of the first terminal apparatus and an ID corresponding to a receiving service. The service ID is used by UE with which a resource is shared to determine UE of initial COT to which data is sent on the shared resource.

It should be understood that the second terminal apparatus that receives the first indication information can determine, based on only the first identifier, whether the second terminal apparatus can use the reserved resource, or the second terminal apparatus that receives the first indication information can determine, based on the first identifier corresponding to the second terminal apparatus and the priority threshold in the first indication information, whether the second terminal apparatus can use the reserved resource. This is not limited in this embodiment of this application.

Optionally, the first indication information sent by the first terminal apparatus to at least one second terminal apparatus further includes at least one first identifier pair, and each first identifier pair is used by the second terminal apparatus to determine whether the shared resource can be used.

Based on the foregoing solution, the first indication information sent by the first terminal apparatus to the at least one second terminal apparatus further includes at least one first identifier, and each first identifier corresponds to one second terminal apparatus, and indicates that a resource in the first COT is shared with the second terminal apparatus corresponding to the first identifier, so that the second terminal apparatus receiving the first indication information can determine, based on the first identifier, whether a resource in the first COT can be used.

With reference to the second aspect, in some implementations of the second aspect, the sharing and licensing information of the PSFCH in the first COT is 1-bit or multi-bit, and indicates the second terminal apparatus to use the PSFCH resource in the first COT.

Based on the foregoing solution, the first terminal apparatus can share the PSFCH resource in the COT determined by the first terminal apparatus with a specific terminal apparatus. Correspondingly, the second terminal apparatus that meets the condition can determine, from the indication information, that the second terminal apparatus can use the PSFCH resource in the first COT to send feedback information, thereby improving resource utilization and improving overall system performance of a sidelink communication system.

With reference to the second aspect, in some implementations of the second aspect, the first indication information is carried in sidelink control information SCI, or the first indication information is carried in a medium access control control element MAC CE.

It should be understood that the first indication information may be carried in 1st-stage SCI, or the first indication information may be carried in 2nd-stage SCI. This is not limited in this embodiment of this application.

Based on the foregoing solution, the first terminal apparatus may add the first indication information to the SCI or the MAC CE, thereby improving the flexibility of COT sharing.

According to a third aspect, a communication method is provided. The method may be performed by a first terminal apparatus, or may be performed by a chip or a circuit configured in the first terminal apparatus. This is not limited in this application. For ease of description, an example in which the method is performed by the first terminal apparatus is used below for description.

The method includes: The first terminal apparatus determines second channel occupancy time COT. The first terminal apparatus sends third indication information to at least one second terminal apparatus, where the third indication information indicates a shared fourth resource, a time domain position of the fourth resource is in the second COT, the third indication information includes at least one resource indication value RIV and/or sharing and licensing information of a PSFCH in the second COT, and each RIV is in a one-to-one correspondence with each fourth resource. The RIV indicates a time domain start position t1 and a time domain end position t2 of the corresponding fourth resource; or the RIV indicates a time domain start position t1 and a length L of the corresponding fourth resource.

Based on the foregoing solution, the first terminal apparatus indicates, based on the resource indication value RIV, the time domain position of the shared resource in the second COT. Compared with a manner of separately indicating a time domain position of a resource, in this solution, bit overheads can be effectively reduced. When same SCI carries user information, in this solution, more UEs can be indicated to use the shared resource, thereby improving resource utilization and improving overall system performance of a sidelink communication system.

With reference to the third aspect, in some implementations of the third aspect, before the first terminal apparatus determines the second COT, the method further includes: The first terminal apparatus receives fourth indication information from the second terminal apparatus. The second indication information indicates a fifth resource, the fifth resource is a resource reserved by the second terminal apparatus for sending data, a time domain position of the fifth resource is in the second COT, and the fifth resource is included in the fourth resource.

With reference to the third aspect, in some implementations of the third aspect, the third indication information includes at least one second identifier, each second identifier is in a one-to-one correspondence with a second terminal apparatus that reserves the fourth resource, and the second identifier indicates that a resource in the second COT is shared with a corresponding second terminal apparatus.

With reference to the third aspect, in some implementations of the third aspect, a quantity of second identifiers is determined based on a quantity of second terminal apparatuses that reserve the fourth resource.

With reference to the third aspect, in some implementations of the third aspect, the sharing and licensing information of the PSFCH in the second COT is 1-bit and indicates whether a third terminal apparatus can use the PSFCH resource in the second COT, and the third terminal apparatus is included in the at least one second terminal apparatus. The third terminal apparatus is a data receiving apparatus of the first terminal apparatus, and/or a terminal apparatus corresponding to the second identifier.

With reference to the third aspect, in some implementations of the third aspect, the sharing and licensing information of the PSFCH in the second COT is a plurality of bits, and indicates one of the following: indicating a third terminal apparatus to use the PSFCH resource in the second COT, where the third terminal apparatus is included in the at least one second terminal apparatus, and the third terminal apparatus is a data receiving apparatus of the first terminal apparatus, and/or a second terminal apparatus corresponding to the second identifier; indicating a data receiving apparatus of a terminal apparatus corresponding to the second identifier to use the PSFCH resource in the second COT; or indicating that the third terminal apparatus cannot use the PSFCH resource in the second COT.

It should be understood that the third terminal apparatus may be replaced with a responding apparatus (Responding Device), or the third terminal apparatus may be any terminal apparatus that receives the first indication message. This is not limited in this embodiment of this application.

Based on the foregoing solution, the first terminal apparatus can share a PSFCH resource that is in the COT and that is determined by the first terminal apparatus with a specific terminal apparatus, thereby improving resource utilization and improving the overall system performance of the sidelink communication system.

With reference to the third aspect, in some implementations of the third aspect, when $t2-t1 \leq 19$, $RIV=39(t2-t1)+N+t1$; or when $20 \leq t2-t1 \leq 39$, $RIV=39(39-t2+t1)+41+N-t1$, where $0 \leq N \leq 244$.

With reference to the third aspect, in some implementations of the third aspect, when $L \leq 19$, $RIV=39(L-1)+t1-1$; or when $20 \leq L \leq 39$, $RIV=39(40-L)+t1$.

Based on the foregoing solution, the first terminal apparatus indicates, based on the resource indication value RIV, the time domain position of the shared resource in the second COT. In this solution, bit overheads can be effectively reduced. When same SCI carries user information, more UEs can be indicated to use the shared resource, thereby improving resource utilization and improving the overall system performance of the sidelink communication system.

With reference to the third aspect, in some implementations of the third aspect, the third indication information is carried in sidelink control information SCI, or the third indication information is carried in a medium access control control element MAC CE.

It should be understood that the third indication information may be carried in 1st-stage SCI, or the third indication information may be carried in 2nd-stage SCI. This is not limited in this embodiment of this application.

Based on the foregoing solution, the first terminal apparatus may add the third indication information to the SCI or the MAC CE, thereby improving flexibility of COT sharing.

According to a fourth aspect, a communication method is provided. The method may be performed by a second terminal apparatus, or may be performed by a chip or a circuit configured in the second terminal apparatus. This is not limited in this application. For ease of description, an example in which the method is performed by the second terminal apparatus is used below for description.

The method includes: The second terminal apparatus receives third indication information, where the third indication information is for sharing a fourth resource, and the third indication information includes at least one resource indication value RIV and/or sharing and licensing information of a PSFCH in second COT. The RIV indicates a time domain start position t1 and a time domain end position t2 of the fourth resource; or the RIV indicates a time domain start position t1 and a length L of the fourth resource. The second terminal apparatus uses the fourth resource based on the third indication information.

Based on the foregoing solution, the second terminal apparatus can indicate, based on the resource indication value RIV included in the third indication information by the first terminal apparatus, the time domain position of the shared resource in the second COT. Compared with a manner of separately indicating a time domain position of a resource, in this solution, bit overheads can be effectively reduced. When same SCI carries user information, in this solution, more UEs can be indicated to use the shared resource, thereby improving resource utilization and improving overall system performance of a sidelink communication system.

With reference to the fourth aspect, in some implementations of the fourth aspect, the sharing and licensing information of the PSFCH in the second COT is 1-bit or multi-bit, and indicates the second terminal apparatus to use the PSFCH resource in the second COT.

Based on the foregoing solution, the first terminal apparatus can share the PSFCH resource in the COT determined by the first terminal apparatus with a specific terminal apparatus. Correspondingly, the second terminal apparatus that meets the condition can determine, from the indication information, that the second terminal apparatus can use the PSFCH resource in the first COT to send feedback information, thereby improving resource utilization and improving the overall system performance of the sidelink communication system.

With reference to the fourth aspect, in some implementations of the fourth aspect, when $t2-t1 \leq 19$, $RIV=39(t2-t1)+N+t1$; or when $20 \leq t2-t1 \leq 39$, $RIV=39(39-t2+t1)+41+N-t1$, where $0 \leq N \leq 244$.

With reference to the fourth aspect, in some implementations of the fourth aspect, when $L \leq 19$, $RIV=39(L-1)+t1-1$; or when $20 \leq L \leq 39$, $RIV=39(40-L)+t1$.

Based on the foregoing solution, the second terminal apparatus can indicate, based on the resource indication value RIV included in the third indication information by the first terminal apparatus, the time domain position of the shared resource in the second COT. In this solution, bit overheads can be effectively reduced. When same SCI carries user information, more UEs can be indicated to use the shared resource, thereby improving resource utilization and improving the overall system performance of the sidelink communication system.

With reference to the fourth aspect, in some implementations of the fourth aspect, the third indication information is carried in sidelink control information SCI, or the third indication information is carried in a medium access control control element MAC CE.

It should be understood that the third indication information may be carried in 1st-stage SCI, or the third indication information may be carried in 2nd-stage SCI. This is not limited in this embodiment of this application.

Based on the foregoing solution, the first terminal apparatus may add the third indication information to the SCI or the MAC CE, thereby improving flexibility of COT sharing.

According to a fifth aspect, a communication method is provided. The method may be performed by a first terminal apparatus, or may be performed by a chip or a circuit configured in the first terminal apparatus. This is not limited in this application. For ease of description, an example in which the method is performed by the first terminal apparatus is used below for description.

The method includes: The first terminal apparatus determines third channel occupancy time COT. The first terminal apparatus sends fifth indication information to at least one second terminal apparatus, where the fourth indication information indicates a shared sixth resource, a time domain position of the sixth resource is in the third COT, the fifth indication information includes at least one resource indication value RIV and/or sharing and licensing information of a PSFCH in the third COT, and each RIV is in a one-to-one correspondence with each sixth resource. The RIV indicates a frequency domain start position t1 and a frequency domain end position t2 of the corresponding sixth resource; or the RIV indicates a time domain start position t1 and a subchannel length L of the corresponding sixth resource.

Optionally, the frequency domain position indicated by the first terminal apparatus based on the RIV is two locations in a resource block set (resource block set, RB set).

Optionally, the frequency domain position indicated by the first terminal apparatus based on the RIV is two absolute resource locations in all RB sets.

Based on the foregoing solution, the first terminal apparatus indicates, based on the resource indication value RIV, the frequency domain position of the shared resource in the third COT. Compared with a manner of separately indicating a frequency domain position of a resource, in this solution, bit overheads can be effectively reduced. When same SCI carries user information, in this solution, more UEs can be indicated to use the shared resource, thereby improving resource utilization and improving overall system performance of a sidelink communication system.

According to a sixth aspect, a communication method is provided. The method may be performed by a second terminal apparatus, or may be performed by a chip or a circuit configured in the second terminal apparatus. This is not limited in this application. For ease of description, an example in which the method is performed by the second terminal apparatus is used below for description.

The method includes: The second terminal apparatus receives fifth indication information, where the fifth indication information is for sharing a sixth resource, and the fifth indication information includes at least one resource indication value RIV and/or sharing and licensing information of a PSFCH in third COT. The RIV indicates a time domain start position t1 and a time domain end position t2 of the sixth resource; or the RIV indicates a time domain start position t1 and a length L of the sixth resource. The second terminal apparatus uses the sixth resource based on the fifth indication information.

Optionally, the frequency domain position indicated by the first terminal apparatus based on the RIV is two locations in an RB set.

Optionally, the frequency domain position indicated by the first terminal apparatus based on the RIV is two absolute resource locations in all RB sets.

Based on the foregoing solution, the second terminal apparatus can indicate, based on the resource indication value RIV included in the fourth indication information by the first terminal apparatus, the time domain position of the shared resource in the third COT. Compared with a manner of separately indicating a time domain position of a resource, in this solution, bit overheads can be effectively reduced. When same SCI carries user information, in this solution, more UEs can be indicated to use the shared resource, thereby improving resource utilization and improving overall system performance of a sidelink communication system.

According to a seventh aspect, a communication apparatus is provided, and includes a transceiver unit and a processing unit, configured to support a communication device in performing the functions of the first terminal in the first aspect, the third aspect, the fifth aspect, and the implementations of the corresponding aspects. The functions may be implemented by hardware, or may be implemented by hardware executing corresponding software. The hardware or the software includes one or more modules corresponding to the functions.

According to an eighth aspect, a communication apparatus is provided, and includes a processor and a transceiver that are configured to support the communication device in performing corresponding functions in the foregoing method. The processor and the transceiver are connected through communication. The transceiver is configured to perform specific signal sending/receiving under driving of the processor. The processor is configured to invoke instructions to implement the data transmission method in the first aspect, the third aspect, the fifth aspect, and the implementations of the corresponding aspects.

According to a ninth aspect, a communication apparatus is provided, and includes a transceiver unit and a processing unit, configured to support a communication device in performing the functions of the second terminal in the second aspect, the fourth aspect, the sixth aspect, and the implementations of the aspects. The functions may be implemented by hardware, or may be implemented by hardware executing corresponding software. The hardware or the software includes one or more modules corresponding to the functions.

According to a tenth aspect, a communication apparatus is provided, and includes a processor and a transceiver that are configured to support the communication device in performing corresponding functions in the foregoing method. The processor and the transceiver are connected through communication. The transceiver is configured to perform specific signal sending/receiving under driving of the processor. The processor is configured to invoke instructions to implement the data transmission method in the second aspect, the fourth aspect, the sixth aspect, and the implementations of the aspects.

According to an eleventh aspect, a communication system is provided. The communication system includes the communication device provided in the fifth aspect or the seventh aspect, and the communication apparatus provided in the sixth aspect or the eighth aspect. The communication system may perform the data transmission method provided in any one of the first aspect to the sixth aspect or the possible implementations of the first aspect to the sixth aspect.

According to a twelfth aspect, a computer-readable storage medium is provided, and is configured to store a computer program. The computer program includes instructions for performing the method in any one of the first aspect to the sixth aspect or the possible implementations of the first aspect to the sixth aspect.

According to a thirteenth aspect, a system chip is provided, and includes a processing unit and a communication unit. For the processing unit, the processing unit may execute computer instructions, to enable a chip in a terminal to perform the method in any one of the first aspect to the sixth aspect or the possible implementations of the first aspect to the sixth aspect.

According to a fourteenth aspect, a computer program product is provided. The product includes instructions for performing the method in any one of the first aspect to the sixth aspect or the possible implementations of the first aspect to the sixth aspect.

According to a fifteenth aspect, a communication apparatus is provided, and includes a processor and a memory.

The processor is configured to execute a computer program or instructions stored in the memory, so that the communication apparatus performs the method in any one of the first aspect to the sixth aspect or the possible implementations of the first aspect to the sixth aspect.

According to a sixteenth aspect, a chip system is provided, and includes a memory and a processor. The memory is configured to store a computer program, and the processor is configured to invoke the computer program from the memory and run the computer program, to enable a communication device in which the chip system is installed to execute instructions of the method in any one of the first aspect to the sixth aspect or the possible implementations of the first aspect to the sixth aspect.

The chip system may include an input circuit or interface for sending information or data, and an output circuit or interface for receiving information or data.

## BRIEF DESCRIPTION OF DRAWINGS

FIG. 1 is a diagram of a wireless communication system to which an embodiment of this application is applicable;
FIG. 2 is a diagram of another wireless communication system to which an embodiment of this application is applicable;
FIG. 3 is a diagram of a typical V2X scenario;
FIG. 4 is a diagram of a slot of a communication resource pool;
FIG. 5 is a diagram of a bitmap indicating subframes available for SL communication;
FIG. 6 is a diagram of a time domain resource in a communication resource pool;
FIG. 7 is a diagram of subchannels at different granularities;
FIG. 8 is a bitmap indicating a PSFCH frequency domain resource;
FIG. 9 is a diagram of a PSFCH time domain resource corresponding to a PSSCH;
FIG. 10 is a diagram of PSFCH frequency domain resource allocation;
FIG. 11 is a diagram of contiguous subchannels;
FIG. 12 is a diagram of indicating a time-frequency resource based on a TRIV and an FRIV;
FIG. 13 is a diagram of a COT sharing scenario;
FIG. 14 is a diagram of another COT sharing scenario;
FIG. 15 is a diagram of a sidelink COT sharing method 100 according to an embodiment of this application;
FIG. 16 is a diagram of a COT sharing scenario to which a method 100 is applicable according to an embodiment of this application;
FIG. 17 is a diagram of still another COT sharing scenario;
FIG. 18 is a diagram of still another COT sharing scenario;
FIG. 19 is a diagram of a sidelink COT sharing method 200 according to an embodiment of this application;
FIG. 20 is a diagram of a COT sharing scenario to which a method 200 is applicable according to an embodiment of this application;
FIG. 21 is a diagram of another COT sharing scenario to which a method 200 is applicable according to an embodiment of this application;
FIG. 22 is a diagram of a COT sharing scenario according to an embodiment of this application;
FIG. 23 is a diagram of a method 300 for indicating idle symbol padding according to an embodiment of this application;
FIG. 24 is a diagram of a scenario of indicating idle symbol padding according to an embodiment of this application;
FIG. 25 is a block diagram of a wireless communication apparatus according to an embodiment of this application; and
FIG. 26 is a block diagram of a terminal device according to an embodiment of this application.

## DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) or new radio (new radio, NR) system, an evolved system after 5G such as a 6th generation (6th generation, 6G) system, and non-terrestrial communication network (non-terrestrial network, NTN) systems such as an inter-satellite communication system and a satellite communication system. The satellite communication system includes a satellite base station and a terminal device. The satellite base station provides a communication service for the terminal device. The satellite base station may also communicate with a terrestrial base station. A satellite may serve as a base station, or may serve as a terminal device. The satellite may be a non-terrestrial base station, a non-terrestrial device, or the like, for example, an uncrewed aerial vehicle, a hot air balloon, a low earth orbit satellite, a medium earth orbit satellite, or a high earth orbit satellite.

The technical solutions in embodiments of this application are applicable to both a homogeneous network scenario and a heterogeneous network (Heterogeneous Network, HetNet) scenario, and impose no limitation on transmission points. The technical solutions may be applied to coordinated multi-point transmission between macro base stations, between micro base stations, and between a macro base station and a micro base station, and are applicable to both an FDD system and a TDD system. The technical solutions in embodiments of this application are applicable to not only a low-frequency scenario (sub 6G), but also a high-frequency scenario (above 6 GHz), terahertz, optical communication, and the like. The technical solutions in embodiments of this application are applicable to not only communication between a network device and a terminal, but also communication between network devices, communication between terminals, communication in internet of vehicles, communication in internet of things, communication in industrial internet, and the like.

The technical solutions in embodiments of this application may alternatively be applied to a scenario in which a terminal is connected to a single base station. The base station connected to the terminal and a core network (core network, CN) connected to the base station are of a same standard. For example, if the CN is a 5G core, the base station is correspondingly a 5G base station, and the 5G base station is directly connected to the 5G core. Alternatively, if the CN is a 6G core, the base station is a 6G base station, and the 6G base station is directly connected to the 6G core. The technical solutions in embodiments of this application are also applicable to a dual connectivity (dual connectivity, DC) scenario in which the terminal is connected to at least two base stations.

The technical solutions in embodiments of this application also use a macro-micro scenario including different forms of base stations in a communication network. For example, the base station may be a satellite, an air balloon station, an uncrewed aerial vehicle station, or the like. The technical solutions in embodiments of this application are also applicable to a scenario in which both a wide-coverage base station and a small-coverage base station exist.

It can be further understood that the technical solutions in embodiments of this application may be further applied to 5.5G, 6G, and later wireless communication systems. Application scenarios include but are not limited to a terrestrial cellular communication scenario, an NTN scenario, a satellite communication scenario, a high altitude platform station (high altitude platform station, HAPS) communication scenario, a vehicle-to-everything (vehicle-to-everything, V2X) scenario, an integrated access and backhaul (integrated access and backhaul, IAB) scenario, a reconfigurable intelligent surface (reconfigurable intelligent surface, RIS) communication scenario, and the like.

A terminal apparatus in embodiments of this application may be a device with a wireless transceiver function, and may be specifically user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may alternatively be a satellite phone, a cellular phone, a smartphone, a wireless data card, a wireless modem, or a machine-type communication device, or may be a cordless phone, a session initiation protocol (session initiation protocol, SIP) phone, a wireless local loop (wireless local loop, WLL) station, a personal digital assistant (personal digital assistant, PDA), customer-premises equipment (customer-premises equipment, CPE), a smart point of sale (point of sale, POS) machine, a handheld device having a wireless communication function, a computing device or another processing device connected to a wireless modem, a vehicle-mounted device, a communication device carried on a high altitude aircraft, a wearable device, an uncrewed aerial vehicle, a robot, a terminal in device-to-device (device-to-device, D2D) communication, a terminal in V2X, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in an evolved communication network after 5G, or the like. This is not limited in embodiments of this application. The terminal apparatus in embodiments of this application may alternatively be a vehicle-mounted module like a roadside unit (roadside unit, RSU), a remote communication module (telematics box, T-Box), or an on board unit (on board unit, OBU), or may be a chip.

In embodiments of this application, a communication apparatus configured to implement a function of the terminal device may be a terminal device, or may be an apparatus that can support the terminal device in implementing the function, for example, a chip system. The apparatus may be installed in the terminal device or used in cooperation with the terminal device. In embodiments of this application, the chip system may include a chip, or may include a chip and another discrete device.

The network device in embodiments of this application is a device with a wireless transceiver function, and is configured to communicate with the terminal device. The access network device may be a node in a radio access network (radio access network, RAN), and may be referred to as a base station, or may be referred to as a RAN node. The access network device may be an evolved NodeB (evolved NodeB, eNB or eNodeB) in LTE, a base station in a 5G network, for example, a gNodeB (gNB), a base station in an evolved public land mobile network (public land mobile network, PLMN) after 5G, a broadband network gateway (broadband network gateway, BNG), an aggregation switch, a 3rd generation partnership project (3rd generation partnership project, 3GPP) access device, or the like. For example, the RAN may be configured as a RAN, an open radio access network (open radio access network, O-RAN), or a cloud access network (cloud radio access network, C-RAN) defined in the 3GPP protocol.

The network device in embodiments of this application may further include various forms of base stations, for example, a macro base station, a micro base station (also referred to as a small cell), a relay station, a transmission reception point (transmission reception point, TRP), a transmission point (transmission point, TP), a mobile switching center, a device that performs a base station function in device-to-device (device-to-device, D2D), vehicle-to-everything (vehicle-everything, V2X), and machine-to-machine (machine, M2M) communication, a network device in an NTN communication system, and the like. This is not specifically limited in embodiments of this application.

The network device in embodiments of this application may further include a network element or a module that implements some functions of the base station, for example, include one or more of the following: a central unit (central unit, CU), a distributed unit (distributed unit, DU), or a radio unit (radio unit, RU). Optionally, the CU may be further separated into a CU-control plane (control plane, CP) and a CU-user plane (user plane, UP). Functions of the CU and the DU may be implemented by different network elements, or may be implemented by a baseband unit (baseband unit, BBU) of the base station. A function of the RU may be implemented by a radio frequency device of the base station. For example, the radio frequency device of the base station may be a radio frequency remote processing unit (remote radio unit, RRU), a pico radio frequency remote unit (pico remote radio unit, pRRU), an active antenna processing unit (active antenna unit, AAU), or another unit, module, or device having a radio frequency processing function. A communication interface protocol between the BBU and the radio frequency device may be a common public radio interface (common public radio interface, CPRI) interface protocol, an enhanced common public radio interface (enhanced common public radio interface, eCPRI) interface protocol, a fronthaul interface protocol between a DU and an RU in an O-RAN system, or the like. This is not limited.

In embodiments of this application, an apparatus configured to implement a function of the network device may be the network device, or may be an apparatus that can support the network device in implementing the function, for example, a chip system. The apparatus may be installed in the network device or used in the network device. In embodiments of this application, the chip system may include a chip, or may include a chip and another discrete device.

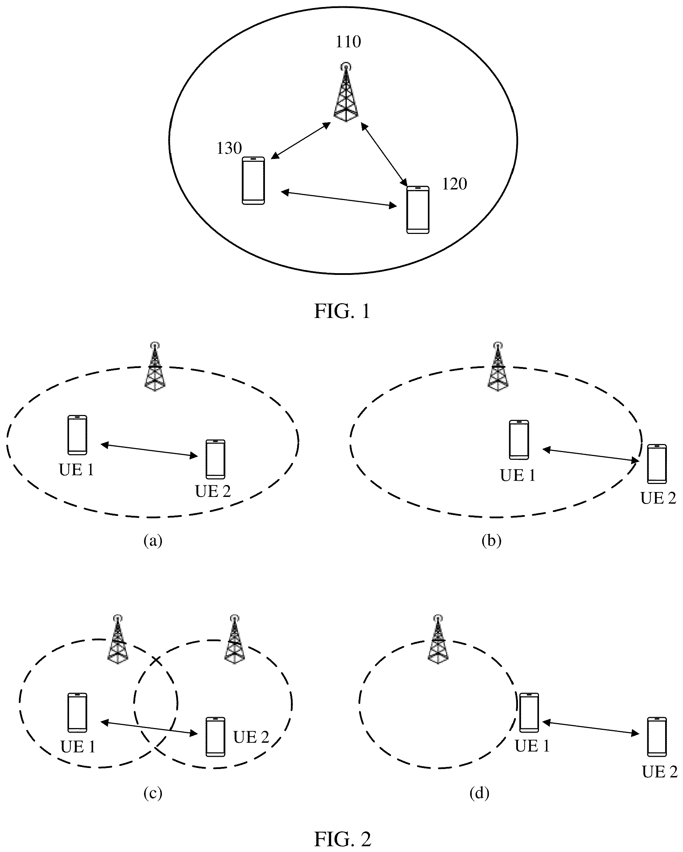

FIG. 1 is a diagram of a wireless communication system to which an embodiment of this application is applicable. As shown in FIG. 1, the wireless communication system may include at least one network device, for example, a network device 110 shown in FIG. 1. The wireless communication system may further include at least one terminal device, for example, a terminal device 120 and a terminal device 130 shown in FIG. 1. A plurality of antennas may be configured for both the network device and the terminal device, and the network device and the terminal device may communicate with each other by using a multi-antenna technology. The terminal devices may directly communicate with each other. A link for direct communication between the terminal devices may be referred to as a sidelink (sidelink, SL), and direct communication between the terminal devices may be referred to as SL communication.

When the network device communicates with the terminal device, the network device may manage one or more cells, and one cell may have an integer quantity of terminal devices. Optionally, the network device 110 and the terminal device 120 form one single-cell communication system. Without loss of generality, the cell is referred to as a cell #1. The network device 110 may be a network device in the cell #1, or the network device 110 may serve a terminal device (for example, the terminal device 120) in the cell #1.

It should be noted that, a cell may be understood as an area in coverage of a radio signal of the network device.

FIG. 2 is a diagram of another wireless communication system to which an embodiment of this application is applicable. As shown in FIG. 2, this embodiment of this application may be applied to an SL communication scenario, and support a communication scenario with network coverage and a communication scenario without network coverage. Scenarios shown in (a) to (c) in FIG. 2 are scenarios in which UE 1 is in network coverage, and a scenario shown in (d) in FIG. 2 is a scenario in which both the UE 1 and UE 2 are outside network coverage. In the scenarios shown in (a) to (c) in FIG. 2, the UE 1 may communicate with the UE 2 on a resource scheduled by a network device, and the resource may be referred to as a licensed resource or a licensed frequency band; or the UE 1 may select a resource from a resource pool through resource self-selection, to communicate with the UE 2, and the resource may be referred to as an unlicensed resource or an unlicensed frequency band. In the scenario shown in (d) in FIG. 2, because both the UE 1 and the UE 2 are outside network coverage, the UE 1 and the UE 2 may communicate through resource self-selection. The resource is a time-frequency resource.

It should be understood that FIG. 1 and FIG. 2 are simplified diagrams of examples for ease of understanding. The wireless communication system may further include another network device or another terminal device that is not shown in FIG. 1 and FIG. 2. Embodiments of this application are applicable to any communication scenario in which a transmitter device communicates with a receiver device.

For ease of understanding of embodiments of this application, several basic concepts in embodiments of this application are briefly described. It should be understood that basic concepts described below are briefly described by using basic concepts specified in a current protocol as an example, but embodiments of this application are not limited to being applied only to a currently existing system. Therefore, names used when the currently existing system is used as an example for description are all functional descriptions, and specific names are not limited, indicate only functions, and may be correspondingly expanded to another system, for example, a 6G system or a future communication system.

1. Near field communication (proximity communication, PC5) interface

Working scenarios supported by cellular vehicle-to-everything (cellular vehicle-to-everything, C-V2X) include both a scenario with cellular network coverage and a scenario without cellular network deployment. C-V2X may provide two communication interfaces: a short-distance direct communication interface (PC5) between a vehicle, a person, and a road, and a communication interface (Uu) between a terminal and a base station, which can implement reliable communication in a long distance and a larger range. When a terminal device (such as a vehicle-mounted terminal, a smartphone, or a roadside unit) that supports C-V2X is in cellular network coverage, the terminal device may use the Uu interface under control of a cellular network. Regardless of whether there is network coverage, the terminal device may use the PC5 interface to perform V2X communication. C-V2X combines the Uu interface and the PC5 interface to support each other for V2X service transmission, to form effective redundancy to ensure communication reliability.

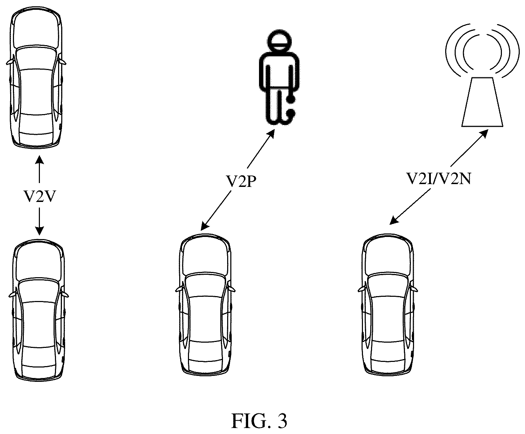

As shown in FIG. 3, C-V2X includes vehicle-to-vehicle (Vehicle to Vehicle, V2V) communication, vehicle-to-pedestrian (Vehicle to Pedestrian, V2P) communication, vehicle-to-infrastructure (Vehicle to Infrastructure, V2I) communication, and vehicle-to-network (V2N) communication. As a cellular system evolves from 4G long term evolution (Long Term Evolution, LTE) to 5G, C-V2X evolves from LTE-V2X to NR-V2X (New Radio V2X, NR-V2X).

V2X communication has great potential in reducing vehicle collision accidents, and therefore reducing a corresponding number of casualties. Advantages of V2X are not limited to improving safety. A vehicle that can perform V2X communication helps better perform traffic management, to further promote green traffic and lower energy consumption. An intelligent transportation system (Intelligent Transportation System, ITS) is an application in combination with V2X. Based on the V2X technology, a vehicle user (Vehicle UE, V-UE for short) can send, to a V-UE nearby, some information about the vehicle user, for example, information such as a location, a speed, and an intention (turning, merging, or reversing), and information triggered by some periodic and aperiodic events, and the V-UE can also receive information from a user nearby in real time. 5G NR V2X can support lower transmission latency, more reliable communication transmission, higher throughput, and better user experience, thereby meeting requirements of more extensive application scenarios. Further, a vehicle-to-vehicle communication technology supported by V2X may be further applied to device-to-device (Device-to-Device, D2D) communication in any system.

The protocol defines two resource allocation modes for the PC5 interface: mode 1 and mode 2. In the mode 1, a base station allocates a transmission resource to V2X through the Uu interface. Therefore, UE in the mode 1 needs to be in network coverage. In the mode 2, UE autonomously selects to allocate a transmission resource to V2X, and does not need to perform allocation via a base station. An SL spectrum resource may be shared with an uplink communication resource. In SL communication, the mode 1 and the mode 2 may be allocated to different resource pools, or may share a resource pool. Resource pool sharing can improve resource utilization, but resource conflicts may occur between the mode 1 and the mode 2. Therefore, the UE in the mode 1 notifies the UE in the mode 2 of a resource allocated for future transmission.

2. SL resource pool

SL communication may be performed based on a resource pool (resource pool). The resource pool is a time-frequency resource dedicated to SL communication. Alternatively, the resource pool may be understood as a set of resources that can be used for SL communication, that is, a set of time domain resources and frequency domain resources used for SL communication.

A resource pool used for SL communication may be briefly referred to as a resource pool, or may be referred to as an SL resource pool. For brevity, the following uses the resource pool for description. The resource pool may also be referred to as a channel (channel), an operating channel (Operating channel), a nominal channel bandwidth (nominal channel bandwidth), and a bandwidth (bandwidth). In other words, the resource pool, the channel, and the bandwidth all represent a set of resources that can be used for SL communication. A name of the resource pool is not limited.

In network coverage, the terminal apparatus may obtain SL resource pool (resource pool) configuration information and/or SL bandwidth part (bandwidth part, BWP) configuration information by receiving a system information block (system information block, SIB) of the network device, cell-specific (cell-specific) radio resource control (radio resource control, RRC) signaling, or UE-specific (UE-specific) RRC signaling of the terminal apparatus. Alternatively, the terminal apparatus may use preconfigured SL resource pool configuration information or SL BWP configuration information, for example, when there is no network coverage. The SL resource pool configuration information includes resource pool resource information, and the resource pool resource information indicates an SL resource pool. The resource pool is a set of time-frequency resources used for sidelink communication between terminal apparatuses. The SL resource pool may further include a code domain resource.

A resource in the SL resource pool includes a resource used by the terminal apparatus to send and receive at least one of the following physical channels, for example, a physical sidelink control channel (physical sidelink control channel, PSCCH), where the PSCCH is used to carry SCI; a physical sidelink shared channel (physical sidelink shared channel, PSSCH), where the PSSCH is used to carry at least one of control information, data, sidelink CSI feedback information, and the like; a physical sidelink discovery channel (physical sidelink discovery channel, PSDCH), where the PSDCH is used to carry a discovery message; and a physical sidelink feedback channel (physical sidelink feedback channel, PSFCH), where the PSFCH is used for sidelink feedback information, and the sidelink feedback information may be used for acknowledgment feedback information of data information, for example, a hybrid automatic repeat request (hybrid automatic repeat request, HARQ), an acknowledgment (acknowledge, ACK), a negative acknowledgment (negative acknowledge, NACK), or channel state indication (channel state information, CSI) feedback information. The sidelink feedback information may further indicate at least one of the following information: for example, energy saving information, resource assistance information (including a resource recommended, a resource not recommended, a resource collision, a resource reservation collision, a half-duplex collision that has occurred in the past or is about to occur in the future), and a physical sidelink broadcast channel (physical sidelink broadcast channel, PSBCH), where the PSBCH is used to carry information about sidelink synchronization.

A type of a service carried on the PSSCH may include a unicast communication type, a multicast communication type, and/or a broadcast communication type. In time domain, the SL resource pool includes one or more time units. The time unit may be one or more symbols, one or more slots (slots), one or more mini-slots (mini-slots), one or more subframes, one or more frames, or the like. The one or more time units may be contiguous or discrete in time.

It should be understood that time domain units in one SL resource pool are logically contiguous.

It should be further understood that, in this application, for specific definitions of the symbol, the mini-slot, the slot, the subframe, and the frame, refer to the 3GPP standard. Details are not described herein again.

It should be noted that, in this application, unless a meaning of the time unit is specially specified, a slot is used for description, but the time unit is not limited to only the slot; and unless a meaning of a time-frequency domain unit is specially specified, a subchannel is used for description, but the frequency domain unit is not limited to only the subchannel.

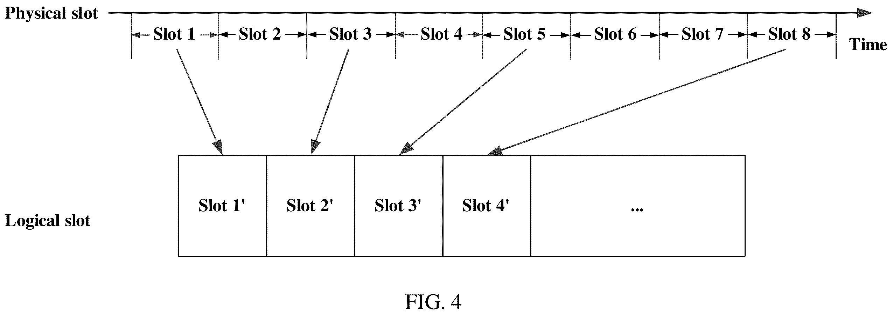

In an example, as shown in FIG. 4, a slot 1 to a slot 8 are contiguous slots in terms of time, and these slots are referred to as physical slots (physical slots). Physical slots, namely, the slot 1, the slot 3, the slot 5, and the slot 8, are configured as slots that belong to one SL resource pool. Slots included in an SL resource pool may be noncontiguous in terms of time. Therefore, from a perspective of the SL resource pool, the slot 1, the slot 3, the slot 5, and the slot 8 in the physical slots respectively correspond to a slot 1', a slot 2', a slot 3', and a slot 4' in the SL resource pool. In this case, contiguous slots (namely, the slot 1', the slot 2', the slot 3', and the slot 4') included in the SL resource pool are logically contiguous slots in the SL resource pool, and the slots that are logically contiguous but not necessarily contiguous in terms of time are referred to as logical slots (logical slots).

In frequency domain, the SL resource pool includes one or more frequency domain units. The frequency domain unit may be one resource element (resource element, RE), several REs, one resource block (resource block, RB), several RBs, one subchannel (subchannel), or several subchannels. A size of one subchannel indicates a quantity of one or more contiguous (continuous) or interlaced (interlaced) RBs included in the subchannel in frequency domain, and the quantity may be an integer such as 10, 12, 15, 20, 25, or 50.

The SL resource pool configuration information may further include PSCCH configuration information. The PSCCH configuration information includes a quantity of symbols occupied by a PSCCH in one slot and a quantity of RBs occupied by a PSCCH in one subchannel. The SL BWP configuration information may include SL resource pool information that is for configuring a quantity of resource pools included in a BWP. The SL BWP configuration information may include SL bandwidth information that indicates a size of a bandwidth for SL communication, for example, indicates that an SL bandwidth is 20 megahertz (MHz). The SL BWP configuration information may further include SL symbol information that indicates a start SL symbol location in one slot and a quantity of occupied contiguous SL symbols. The SL BWP configuration information may further include information about a subcarrier spacing and a cyclic prefix that are of an SL, and the information indicates a subcarrier spacing and a cyclic prefix that are used for SL communication. The cyclic prefix indicates an extended cyclic prefix or a normal cyclic prefix. In a possible configuration, the SL BWP configuration information may further include the SL resource pool configuration information.

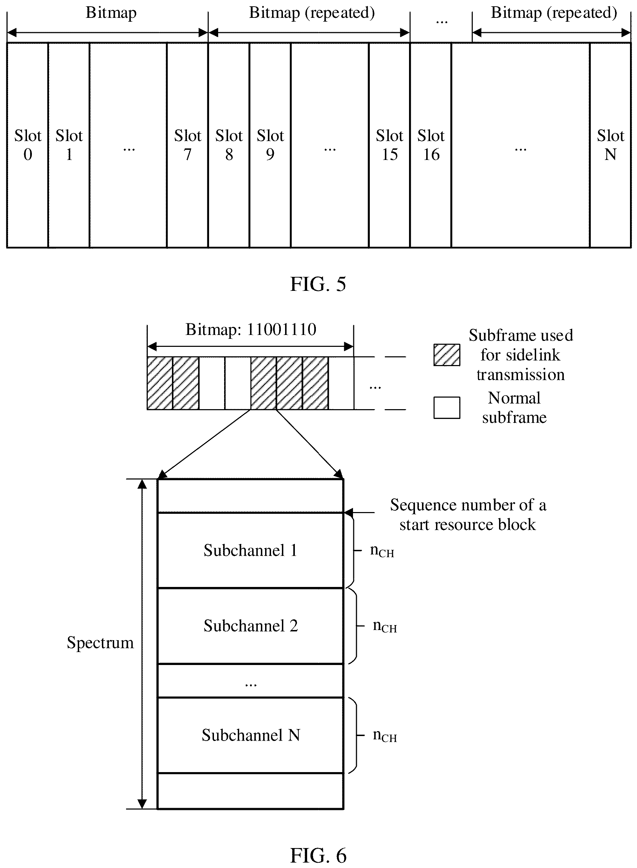

A time-frequency resource for SL communication is configured based on an SL communication resource pool. The SL communication resource pool may be considered as a set of time resources and frequency resources used for SL communication. For a time resource, a base station uses one bitmap and periodically repeats the bitmap to indicate a set of subframes that are in all subframes in a system and that are used for SL communication. FIG. 5 is a diagram of a bitmap indicating slots available for SL communication. A length of the bitmap is 8 bits. As shown in FIG. 5 and FIG. 6, a quantity of symbols occupied by SL transmission in each slot is fixed at M symbols, and M is defined as one SL time domain transmission duration or one time domain transmission unit.

For frequency resources in an SL communication resource pool, a base station divides a frequency band for SL communication into several subchannels, and each subchannel includes a specific quantity of resource blocks, for example, 10, 12, 15, 20, 25, 50, 75, or 100 physical resource blocks (Physical resource blocks, PRBs). FIG. 6 is a diagram of a frequency resource in a communication resource pool. A base station indicates a sequence number of the 1st resource block of a frequency resource used for SL communication, a total quantity N of subchannels included in the communication resource pool, and a quantity nCH of resource blocks included in each subchannel. One SL transmission may occupy one or more subchannels. When an SL communication resource is scheduled, scheduling in frequency domain is performed at a granularity of subchannel.

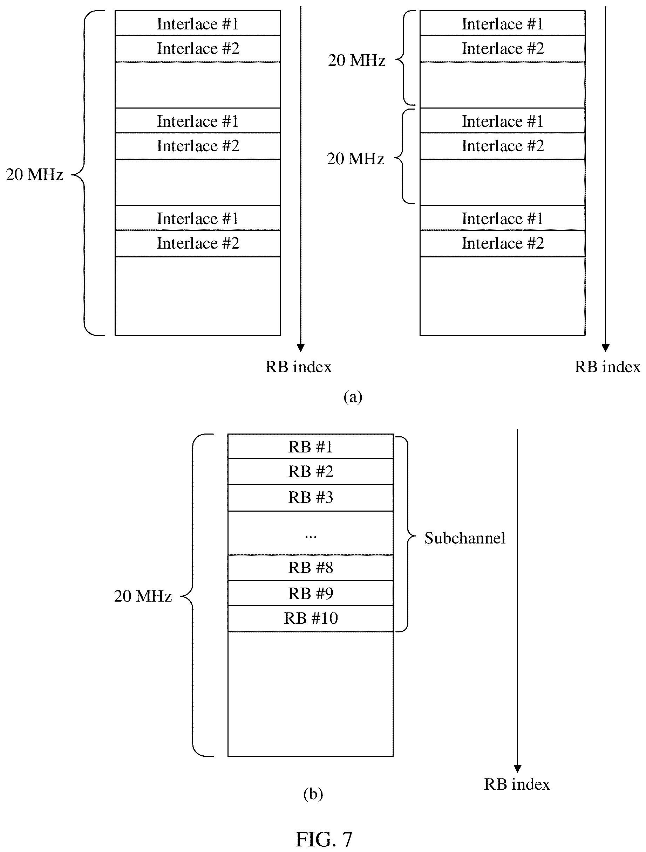

In this embodiment of this application, a subchannel may include one or more interlaces, and a subchannel including one interlace may span one RB set or a plurality of RB sets. One RB set corresponds to one channel on which listen before talk, that is, a channel access program, is performed. FIG. 7 is a diagram of subchannels at different granularities. As shown in (a) in FIG. 7, one interlace may span a plurality of RB sets or may be on only one RB set, and one RB set may correspond to one 20 MHz channel. Alternatively, as shown in (b) in FIG. 7, a subchannel may include a plurality of contiguous RB resources.

The SL resource pool configuration information may further include configuration information of a PSCCH. If a PSFCH feedback resource is configured in the resource pool, the PSFCH feedback resource is configured once every N slots. In a scenario of a V2X transmission mode 2, different from base station scheduling, a user need to select a PSSCH sending resource based on a listening result of the user. To simplify a PSFCH resource selection process, NR-V2X configures a PSFCH feedback resource for each PSSCH subchannel. A specific process of determining the PSFCH resource corresponding to each subchannel is as follows:

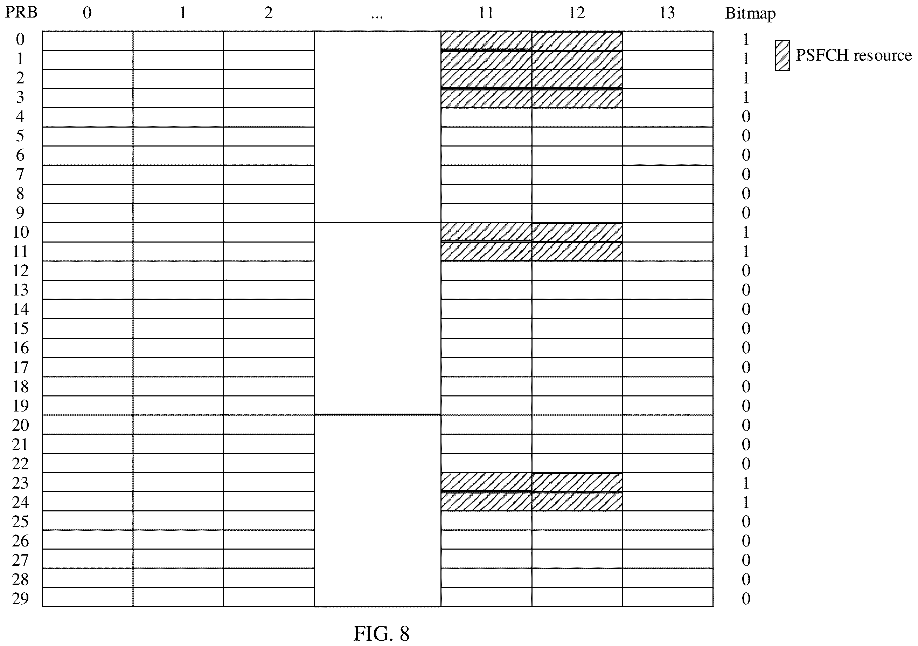

(1) A bitmap (bitmap) of a PSFCH frequency domain resource is configured for the resource pool, to indicate whether a specific PRB in a frequency domain resource on which the resource pool is located can be used as a PSFCH resource. To be specific, a length of bit information included in the bitmap is equal to a quantity of PRBs in the resource pool. A bit 1 in the bitmap indicates that a corresponding PRB can be used for PSFCH transmission, and a bit 0 indicates that a corresponding PRB resource cannot be used for PSFCH transmission. The leftmost bit of the bitmap is a smallest PRB index in the resource pool. Particularly, the PSFCH resource may be used for HARQ-ACK transmission, and the resource is denoted as an sl-PSFCH-RB-Set bitmap. A bit value 1 in the bitmap indicates a corresponding PRB resource can be used for HARQ-ACK feedback. In addition, the PSFCH resource may also be used for conflict indication in an inter-UE coordination (inter-UE coordination, IUC) scheme 2 mode. The resource is denoted as a bitmap corresponding to sl-RB-SetPSFCH, and a bit 1 in the bitmap indicates that a corresponding PRB resource can be used for scheme 2 conflict indication. It should be noted that a location at which a bit value is 1 in sl-PSFCH-RB-Set does not overlap a location at which a bit value is 1 in sl-RB-SetPSFCH. FIG. X1 is a diagram of indication of a bitmap for a PSFCH resource according to an embodiment of this application. In a slot having a PSFCH transmission resource, it is assumed that one subchannel includes 10 PRBs and a resource pool has three subchannels in total. In this case, a bitmap indicating a PSFCH frequency domain resource in the resource pool includes 3* 10=30 bits in total to indicate whether each PRB is available for PSFCH transmission. As shown in FIG. 8, the bitmap indicates that the first four PRBs of the first subchannel may be used for PSFCH feedback. The bitmap may indicate the HARQ-ACK resource, or may indicate the scheme 2 conflict resource.

(2) Because every N PSSCH slots correspond to one PSFCH feedback slot, for a resource pool including $N_{\text{subch}}$ subchannels, a quantity of RBs of a PSFCH feedback resource corresponding to each subchannel is

$$M_{\text{subch, slot}}^{\text{PSFCH}} = M_{\text{PRB, set}}^{\text{PSFCH}} / \left( N_{\text{subch}} \cdot N_{\text{PSSCH}}^{\text{PSFCH}} \right)$$, where $M_{\text{PRB, set}}^{\text{PSFCH}}$ represents a quantity of PRBs of a PSFCH frequency domain resource, that is, indicates a total quantity of bits whose value is 1 in a bitmap of the PSFCH frequency domain resource.

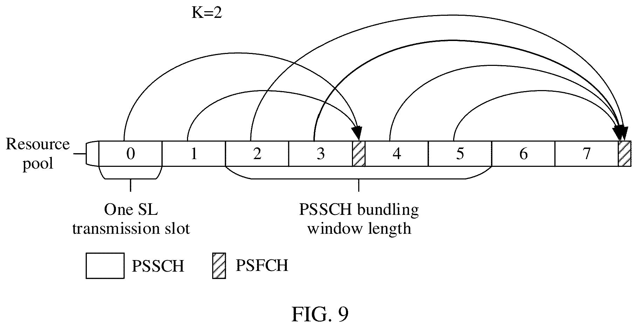

(3) Considering a limitation of a decoding capability of a receiver device, the receiver device cannot perform feedback immediately after receiving a PSSCH. Therefore, a time gap K for PSSCH feedback is defined in a standard. To be specific, a PSFCH is transmitted for the PSSCH in a 1st available slot including a PSFCH resource. The slot and a slot in which the PSSCH is located are spaced by at least K slots, where a value of K is configured by a resource pool. FIG. 9 is a diagram in which a PSSCH corresponds to a PSFCH time domain resource. When K=2, for PSSCHs carried in slots 0 and 1, feedback may be performed on a PSFCH resource in a slot 3, and for PSSCHs carried in slots 2, 3, 4, and 5, feedback is performed on a PSFCH resource in a slot 7. In addition, because feedback for the slots 2, 3, 4, and 5 is performed on the PSFCH resource in one slot, the slots 2, 3, 4, and 5 may be referred to as a PSSCH bundling window length.

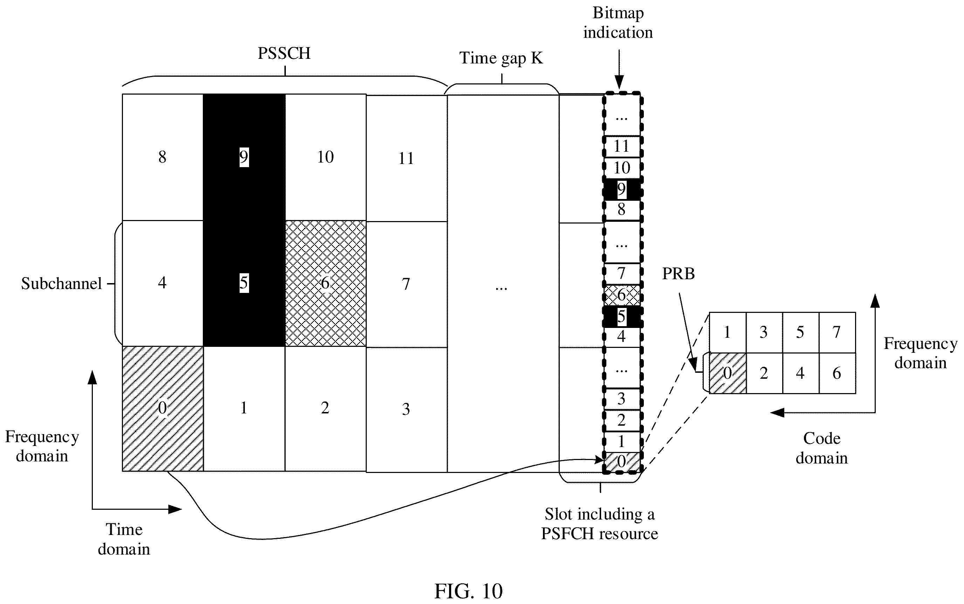

(4) Available PSFCH resources in a PSFCH feedback slot are allocated, in time domain first and then in frequency domain, to each subchannel in a feedback periodicity. FIG. 10 is a diagram of PSFCH frequency domain resource allocation. When $N_{\text{PSSCH}}^{\text{PSFCH}} = 4$, a PSFCH resource corresponding to each subchannel in four bundled PSSCH slots is a PSFCH feedback resource of one PRB allocated to each subchannel in each slot. In terms of formula representation, for an $i^{th}$ slot in N bundled PSSCH slots, if a number of a frequency domain subchannel in a resource pool is $j$, a corresponding PSFCH resource is $\left[\left(i + j \cdot N_{PSSCH}^{PSFCH}\right) \cdot M_{subch,\,slot}^{PSFCH}, \left(i + 1 + j \cdot N_{PSSCH}^{PSFCH}\right) \cdot\right.$

$\left. M_{subch,\,slot}^{PSFCH} - 1\right]$. If a user occupies two subchannels for transmission, for PSSCHs corresponding subch, slot to 5 and 9 in the figure, PSFCH resources corresponding to the PSSCHs are also 5 and 9 respectively, and are non-contiguous in frequency domain.

For PSFCH feedback, a NACK and a NACK form a pair, and are represented by different orthogonal sequences, that is, a code domain. The valid logarithm may be configured by using a parameter, that is, *numMaxCSPair* = {1, 2, 3, 4, 6}, and a maximum of {2, 4, 6, 8,12} pieces of information corresponding to the valid logarithm can be fed back.

SCI of an NR SL system is classified into 1st-stage SCI and 2nd-stage SCI. The PSCCH carries the 1st-stage SCI. The 1st-stage SCI is used to schedule the 2nd-stage SCI and the PSSCH. Because the SL is a distributed system, all UEs need to correctly decode the 1st-stage SCI before decoding the 2nd-stage SCI and the PSSCH. However, to reduce complexity of blind detection (blind decoding) performed by the UE on the PSCCH, a resource location of the PSCCH is fixed, and format information of the carried 1st-stage SCI is also unique. In other words, the UE does not need to blindly detect a time-frequency resource location of the PSCCH, and also does not need to blindly detect SCI in different formats, and the UE only needs to detect, at a fixed time-frequency resource location of the PSCCH, whether there is the 1st-stage SCI. A PSCCH may exist in each subchannel in each slot, that is, a time domain start position of a PSCCH is the 2nd symbol for SL transmission in each slot, and a length is two or three symbols (determined based on resource pool configuration information); and a frequency domain position is a smallest PRB index (index) of each subchannel, and a length is at least 10 PRBs (determined based on the resource pool configuration information) but does not exceed a size of the subchannel.

A Frequency resource assignment field and a Time resource assignment field in the 1st-stage SCI respectively indicate a frequency domain resource and a time domain resource for transmitting the PSSCH. A Resource reservation period field indicates that a resource for transmitting the PSSCH is periodically reserved. A value of the Resource reservation period field is configured by the network device or preconfigured, or predefined. For example, the value is indicated via first RRC signaling, and the first RRC signaling may be determined by sl-ResourceReservePeriod1. A format of the 2nd-stage SCI is indicated by a 2nd-stage SCI format field in the 1st-stage SCI. An existing 2nd-stage SCI format field is shown in Table 1.

Table 1

| 2nd-stage SCI format field (Value of 2nd-stage SCI format field) | 2nd-stage SCI format (2nd-stage SCI format) |
|---|---|
| 00 | SCI format 2-A |
| 01 | SCI format 2-B |
| 10 | SCI format 2-C |
| 11 | Reserved |

In the protocol, a transmission resource of transmitter UE in a user-selected resource mode (mode 2) does not depend on a base station. The transmitter UE selects, in a resource selection window based on a result of sensing in a sensing window of the transmitter UE, a transmission resource for communication.

In an example, it is assumed that the transmitter UE triggers resource selection in a slot n. A specific resource selection procedure is as follows:

Step 1: Determine a candidate resource $R_{x,y}$ and a resource selection window $[n + T_1, n + T_2]$ in units of one slot and $L_{subCH}$ contiguous subchannels, where $0 \leq T_1 \leq T_{proc,1}^{SL}$, $T_{proc,1}^{SL}$ is determined in Table 1, $\mu_{SL}$ is a configured subcarrier spacing, and $T_1$ is selected based on implementation. If $T_{2min}$ (configured by a higher layer) is less than a remaining PDB (data packet delay), $T_{2min} \leq T_2 \leq PDB$ (data packet delay), and $T_2$ is selected based on implementation. Otherwise, $T_2$ is equal to the remaining PDB.

Step 2: Determine a sensing window $\left[n - T_0, n - T_{proc,0}^{SL}\right)$, where $T_0$ is configured by using a higher layer parameter, and $T_{proc,0}^{SL}$ is determined in Table 2.

Table 2

| $\mu_{SL}$ | $T_{proc,1}^{SL}$ [Slot] |
|---|---|
| 0 | 3 |
| 1 | 5 |
| 2 | 9 |
| 3 | 17 |

Step 3: Determine a reference signal received power (reference signal received power, RSRP) threshold Th($p_i$, $p_j$), where the RSRP threshold and *prio*TX of to-be-sent data are related to a priority *prio*RX indicated by received sidelink control information (sidelink control information, SCI). Specifically, Th($p_i$, $p_j$) is a (*prio*RX+(*prio*TX-1)*8)th threshold in an RSRP threshold set configured for a resource pool.

Step 4: Initialize an available resource set $S_A$ to include all time-frequency resources in the resource selection window.

Step 5: Exclude the following time-frequency resources from $S_A$: slots reserved for all periodic resources configured in a resource pool corresponding to a slot (a slot for sending) that is not sensed in the sensing window.

Step Sa: If the time-frequency resources excluded from $S_A$ are less than X% of the total resources in the resource selection window, perform initialization in step 4 again.

Step 6: Continue to exclude the following time-frequency resources from $S_A$: time-frequency resources that are reserved for received and successfully decoded 1st-stage SCI, of which results of RSRP measurement on PSSCH demodulation reference signals (demodulation reference signals, DMRSs) are higher than the RSRP threshold determined in step 3, that are in the resource selection window, and that include a retransmission resource indicated by the 1st-stage SCI and a periodically reserved resource.

Step 7: If a quantity of remaining resources in $S_A$ is less than X% of the total quantity of resources in the resource selection window, where a value of X% is configured for the resource pool and is related to *prio*TX, increase the RSRP threshold determined in step 3 (increase by 3 each time), until the quantity of remaining resources in $S_A$ is not less than X% of the total quantity of resources in the resource selection window, and continue to perform step 4.

$S_A$ is reported to a higher layer (for example, a MAC layer), and time-frequency resources ($r_0$, $r_1$, $r_2$, ... ) are randomly selected from $S_A$ to send data. Before sending the data, resource re-evaluation is performed on ($r_0$, $r_1$, $r_2$, ... ), and after re-evaluation, preemption detection is performed on resources ( $r_0'$, $r_1'$, $r_2'$, ... ) selected from $S_A$.

A user performs resource re-evaluation and preemption detection in at least a slot m-T3 ( $T_3=T_{proc,1}^{SL}$ ), and the UE may additionally trigger resource re-evaluation and/or preemption detection before and after the slot m-T3 based on implementation. A manner for determining whether ($r_0$, $r_1$, $r_2$, ... ) and ( $r_0'$, $r_1'$, $r_2'$, ... ) need to be excluded is the same as that in step 7, and one of the following conditions is met:

(1) an sl-PreemptionEnable parameter is provided with a configuration as enabled, and *prio*TX>*prio*RX; or
(2) the sl-PreemptionEnable parameter is provided without a configuration as enabled, and *prio*RX<*prio*pre and *prio*TX>*prio*pre, where *prio*pre is configured by a higher layer. If $r_i$ and/or $r_i'$ in ($r_0$, $r_1$, $r_2$, ... ) and ( $r_0'$, $r_1'$, $r_2'$, ... ) does not belong to $S_A$ (that is, $r_i$ and $r_i'$ are excluded during re-evaluation and/or preemption detection respectively), $r_i$ and/or $r_i'$ is reselected. A slot m is a next slot for sending, that is, the slot m belongs to ($r_0$, $r_1$, $r_2$, ... ) and ( $r_0'$, $r_1'$, $r_2'$, ... ).

3. Time domain resource indication value (Time resource indication value, TRIV) and frequency domain resource indication value (Frequency resource indication value, FRIV)

In LTE-V2X, a PSSCH frequency resource is defined as a group of contiguous subchannels with a length of $L_{subCH}$. Therefore, a frequency domain position of a PSSCH is determined by a start subchannel index $n_{subCH}^{start}$ and the length $L_{subCH}$ of the group of contiguous subchannels in a sidelink resource pool, where $1 \le L_{subCH} \le N_{subCH}$, $0 \le n_{subCH}^{start} \le N_{subCH} - L_{subCH}$, and $N_{subCH}$ is a total quantity of subchannels corresponding to the sidelink resource pool.

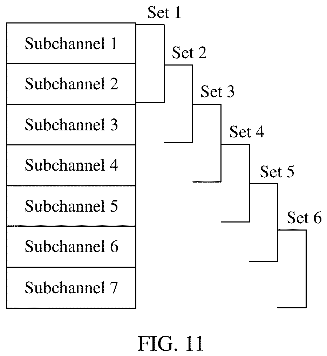

As shown in FIG. 11, it is assumed that $N_{subCH}$ = 8, and $L_{subCH}$ = 2, there are, in total, $N_{subCH}$ - $L_{subCH}$ + 1 = 7 groups of contiguous subchannels whose lengths are 2, corresponding to a set 0 to a set 6 in the figure, and start subchannel indexes $n_{subCH}^{start}$ of groups of contiguous subchannels are respectively 0 to 6, that is, when the length $L_{subCH}$ is determined, there are $N_{subCH}$ - $L_{subCH}$ + 1 corresponding start subchannel indexes $n_{subCH}^{start}$ in total corresponding to the length.

In addition, in LTE-V2X, one piece of SCI indicates a maximum of two PSSCH resources. Frequency locations of the two PSSCH resources are shown as follows: A start subchannel index of one PSSCH resource is determined by a subchannel index $m$ of the current SCI, and the current SCI may be SCI of sending UE or SCI of receiving UE. A start subchannel index $n_{subCH}^{start}$ of the other PSSCH resource and subchannel lengths $L_{subCH}$ of the two PSSCH resources are indicated by a "Frequency resource location of the initial transmission and retransmission" field in the SCI. The frequency domain field has $\lceil log_2(N_{subCH}(N_{subCH} + 1)/2) \rceil$ bits in total, and indicates $N_{subCH}(N_{subCH}$ + 1)/2 locations in total. When the lengths $L_{subCH}$ are determined, $N_{subCH}$ - $L_{subCH}$ + 1 corresponding start subchannel indexes $n_{subCH}^{start}$ in total correspond to the lengths. Therefore, a quantity $N_{subCH}(N_{subCH}$ + 1)/2 of locations indicated by the "Frequency resource location of the initial transmission and retransmission" field may be interpreted as 1 + 2 + ... + $N_{subCH}$.

Specifically, a value of the field is represented by a resource indication value (RIV), and a correspondence between the RIV and a start subchannel index $n_{subCH}^{start}$ and a length $L_{subCH}$ of a frequency domain resource indicated by the field is as follows:

$$\text{If } (L_{subCH} - 1) \leq \lfloor N_{subCH}/2 \rfloor \text{ then}$$

$$RIV = N_{subCH} * (L_{subCH} - 1) + n_{subCH}^{start} \qquad (1)$$

$$\text{Else}$$

$$RIV = N_{subCH} * (N_{subCH} - L_{subCH} + 1) + (N_{subCH} - 1 - n_{subCH}^{start}) \qquad (2)$$

The following uses $N_{subCH}$ = 10 as an example to specify a coding principle of the RIV. As shown in Table 3, an upper triangular matrix can be obtained by substituting a start subchannel index $n_{subCH}^{start}$ and a length $L_{subCH}$ into the foregoing formula based on a definition of the RIV. When a value of L is 1 to 6, a non-zero element in the matrix corresponds to the $(L_{subCH} - 1) \leq \lfloor N_{subCH}/2 \rfloor$ part. When a value of L is 7 to 10, a non-zero element corresponds to the $(L_{subCH} - 1) > \lfloor N_{subCH}/2 \rfloor$ part. It should be noted that zero in a lower triangular matrix herein is not a value of RIV, and is merely used to highlight a structure of the upper triangular matrix. A row quantity index corresponding to each element in the upper triangular matrix indicates a length $L_{subCH}$, and a column quantity index indicates a start subchannel index $n_{subCH}^{start}$. For example, 25 in the table corresponds to $L_{subCH}$ = 3 and $n_{subCH}^{start} = 5$.

It may be found by observing the table that a lower half part of the upper triangular matrix corresponds to missing values in an upper half part. For example, 19 in the table may be flipped and filled in the second row, 29 and 28 in the table may be flipped and filled in the third row in a reverse order, 39, 38, and 37 in the table may be flipped and filled in the fourth row in a reverse order, and so on, so that the upper triangular matrix may be transformed into a rectangle, and a length of each row is exactly $N_{subCH}$. When the lower half part of the upper triangular matrix is flipped and filled, a corresponding row quantity index $N_{subCH}$ - $L_{subCH}$ + 2 may be considered as a mapping row quantity index corresponding to an original row quantity $L_{subCH}$ of the lower half part of the upper triangular matrix. For example, the tenth row is mapped to the second row, the ninth row is mapped to the third row, and so on.

Table 3

| L=10 | Resource indication value RIV | | | | | | | | | |
|---|---|---|---|---|---|---|---|---|---|---|
| 1 | 0 | 1 | 2 | 3 | 4 | 5 | 6 | 7 | 8 | 9 |
| 2 | 10 | 11 | 12 | 13 | 14 | 15 | 16 | 17 | 18 | 0 |
| 3 | 20 | 21 | 22 | 23 | 24 | 25 | 26 | 27 | 0 | 0 |

(continued)

| L=10 | Resource indication value RIV | | | | | | | | | |
|---|---|---|---|---|---|---|---|---|---|---|
| 4 | 30 | 31 | 32 | 33 | 34 | 35 | 36 | 0 | 0 | 0 |
| 5 | 40 | 41 | 42 | 43 | 44 | 45 | 0 | 0 | 0 | 0 |
| 6 | 50 | 51 | 52 | 53 | 54 | 0 | 0 | 0 | 0 | 0 |
| 7 | 49 | 48 | 47 | 46 | 0 | 0 | 0 | 0 | 0 | 0 |
| 8 | 39 | 38 | 37 | 0 | 0 | 0 | 0 | 0 | 0 | 0 |
| 9 | 29 | 28 | 0 | 0 | 0 | 0 | 0 | 0 | 0 | 0 |
| 10 | 19 | 0 | 0 | 0 | 0 | 0 | 0 | 0 | 0 | 0 |

In addition, a start RIV of each row is exactly a sum of all elements in rows preceding the row after transformation into the rectangle. For example, a start RIV of the third row is 20, which is exactly a sum of elements in the first two rows after transformation into the rectangle. In addition, a red RIV of each row after transformation is exactly a sum of a start RIV and a start subchannel index $n_{subCH}^{start}$ of the row. For example, 35 in the table is a sum of the start RIV 30 in the fourth row and the start subchannel index $n_{subCH}^{start} = 5$. A black RIV of each row after transformation is exactly a sum of a start RIV of the row and a mapping start subchannel index. The mapping start subchannel index herein is a difference between a length $N_{subCH}$ of the row after transformation minus 1 and a start subchannel index $n_{subCH}^{start}$ of the RIV. One is subtracted from the length $N_{subCH}$ of each row because the RIV starts from 0.

For example, 38 in the table corresponds to $L_{subCH}$ = 8, $n_{subCH}^{start} = 1$, 38 is filled into the last but one in the fourth row in a reverse order, and 38 is a sum of the start RIV 30 in the fourth row and $N_{subCH} - 1 - n_{subCH}^{start} = 8$. Because a start RIV of a next row is equal to a sum of a start RIV of a current row and a length of the current row, the black RIV of each row after transformation may also be understood as a difference between a start RIV of a next row after transformation minus 1 and a start subchannel index of the RIV. For example, 38 in the table is a difference between a start RIV 40 in the fifth row minus 1, that is, 39, and $n_{subCH}^{start} = 1$.

The foregoing rule may also be obtained by directly analyzing the definition of the RIV. When $(L_{subCH} - 1) \le \lfloor N_{subCH}/2 \rfloor$, the RIV may be divided into two parts: $N_{subCH}(L_{subCH} - 1)$ and $n_{subCH}^{start}$. If a length of each row is exactly $N_{subCH}$, $N_{subCH}(L_{subCH} - 1)$ corresponds to a sum of all elements preceding the row after transformation into a rectangle, and $n_{subCH}^{start}$ corresponds to a start subchannel index. When $(L_{subCH} - 1) > \lfloor N_{subCH}/2 \rfloor$, $N_{subCH} * (N_{subCH} - L_{subCH} + 1)$ corresponds to a sum of all elements preceding the row after transformation into a rectangle, $(N_{subCH} - L_{subCH} + 1)$ indicates that $L_{subCH}$ corresponds to a row preceding a mapping row quantity index, and $N_{subCH} - 1 - n_{subCH}^{start}$ corresponds to a mapping start subchannel index.

It can be found from the foregoing table that there are 55 index values in total, and only 6 bits are required for indication. If a start position and a length are separately indicated, 4(24>10)+4(24>10)=8 bits are required for indication, so that 2 bits can be reduced by using a TRIV.

In NR-V2X, one piece of SCI needs to indicate a maximum of two or three PSSCH resources. When a higher-layer parameter $N_{MAX}$ = 2, one piece of SCI needs to indicate a maximum of two PSSCH resources, and an indication manner is the same as that of LTE-V2X. When a higher-layer parameter $N_{MAX}$ = 3, one piece of SCI needs to indicate a maximum of three PSSCH resources, and subchannel lengths $L_{subCH}$ of the three PSSCH resources in frequency domain are the same. A start subchannel index of one PSSCH resource is determined by a subchannel index $m$ of the current SCI, and start subchannel indexes $n_{subCH}^{start1}$ and $n_{subCH}^{start2}$ of the remaining two PSSCH resources and subchannel lengths $L_{subCH}$ need to be indicated by a "Frequency resource assignment" field in the SCI. This field has $\lceil log_2(N_{subCH}(N_{subCH} + 1)(2N_{subCH} + 1)/6) \rceil$ bits and indicates $N_{subCH}(N_{subCH} + 1)(2N_{subCH} + 1)/6$ possibilities in total.

Specifically, an FRIV needs to indicate start subchannel indexes $n_{subCH}^{start1}$ and $n_{subCH}^{start2}$ and subchannel lengths $L_{subCH}$ of two PSSCH resources. For a specific $L_{subCH}$, $n_{subCH}^{start1}$ and $n_{subCH}^{start2}$ each have $N_{subCH}$ - $L_{subCH}$ + 1 possible locations in total, that is, there are $(N_{subCH}$-$L_{subCH}$ + 1$)^2$ possible location combinations in total. When $L_{subCH}$ = 1, $(N_{subCH}$ - $L_{subCH}$ + 1$)^2$ = $(N_{subCH})^2$, when $L_{subCH}$ = 2, $(N_{subCH}$ - $L_{subCH}$ + 1$)^2$ = $(N_{subCH}$ - 1$)^2$, and so on. An FRIV needs to indicate 1 + 2 + ... + $(N_{subCH})^2$ = $N_{subCH}(N_{subCH}$ + 1)(2$N_{subCH}$ + 1)/6 possible location combinations in total. Therefore,

$$\lceil log_2(N_{subCH}(N_{subCH} + 1)(2N_{subCH} + 1)/6) \rceil$$ bits are required in total.

In addition, positions of the three PSSCH resources in time domain are indicated by a "Time resource assignment" field in the SCI. The field has 9 bits in total, and may respectively indicate three cases: only one PSSCH resource is indicated in the SCI (one possibility), two PSSCH resources are indicated in the SCI (($W$ - 1) possibilities), and three PSSCH resources are indicated in the SCI (($W$ - 1) * ($W$ - 2)/2 possibilities). $W$ = 32 is a maximum length of a resource window of a maximum of three PSSCH resources in time domain, that is, the maximum of three PSSCH resources can be located only in a time domain window with a length of 32 slots.

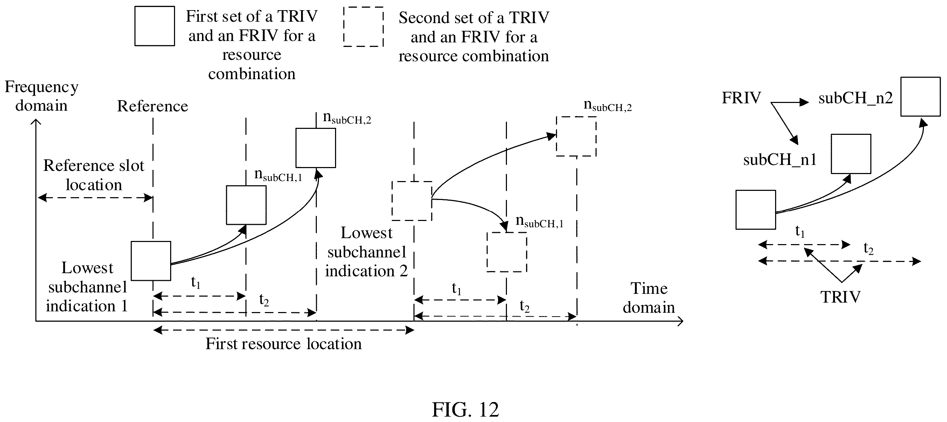

Specifically, in NR-V2X, a manner of indicating the TRIV and the FRIV is as follows: For the TRIV, if "sl-MaxNumPerReserve" is configured as 2, a quantity N of reservations may be correspondingly configured as 1 or 2. If "sl-MaxNumPerReserve" is configured as 3, a quantity N of reservations may be correspondingly configured as 1, 2, or 3. A specific TRIV indication manner is shown in FIG. 12:

If N = 1

$$TRIV = 0$$

Else if N = 2

$$TRIV = 0$$

Else if

If $t2 - t1 - 1 \leq 15$

$$TRIV = 30(t2 - t1 - 1) + t1 + 31$$

Else

$$TRIV = 30(31 - t2 + t1) + 62 - t1$$

For the TRIV, if "sl-MaxNumPerReserve" is configured as 2,

$$FRIV = n_{subCH,1}^{start} + \sum_{i=1}^{L_{subCH}-1}(N_{subCH} + 1 - i).$$

If "sl-MaxNumPerReserve" is configured as 3,

$$FRIV = n_{subCH,1}^{start} + n_{subCH,2}^{start} \times (L_{subCH} + 1 - i) + \sum_{i=1}^{L_{subCH}-1}(N_{subCH} + 1 - i)^2.$$

3. Listen before talk (listen before talk, LBT) mechanism

In an evolution process of a wireless communication system, research on an unlicensed frequency band gradually starts. For example, technologies such as LTE-U, LAA, and MulteFire emerge. The 3GPP organization has standardized LAA, and enhanced licensed assisted access (enhanced licensed assisted access, eLAA) and further enhanced licensed assisted access (further enhanced licensed assisted access, feLAA) technologies has been developed, so that an LTE system is capable of coexisting with a Wi-Fi device based on an LBT mechanism, and enabling LTE Uu interface communication on an unlicensed frequency band. In a 5G NR system, NR protocol technologies in an unlicensed frequency band are collectively referred to as NR-U. To improve Uu interface communication performance corresponding to the NR-U, the 3GPP organization has discussed a method for integrating a frame structure of a Uu interface with the LBT mechanism.

Correspondingly, enabling SL communication on an unlicensed frequency band in local space is also an important evolution direction, and corresponding protocol technologies may be collectively referred to as SL-U. Similar to the Uu interface, a terminal that operates according to the SL-U also need to coexist with a nearby Wi-Fi device based on the LBT mechanism.

The LBT mechanism is a channel access rule based on random back-off (random back-off). To be specific, before accessing a channel and starting to send data, a terminal needs to sense whether the channel is idle (idle). If the terminal senses that the channel is idle for a specific period of time, the terminal may occupy the channel. If the terminal senses that the channel is not idle, the terminal needs to wait and can occupy the channel only after the channel is restored to idle again. The LBT mechanism is a mandatory feature for using an unlicensed frequency band because there are regulation (regulation) requirements in various regions around the world for using unlicensed frequency bands. Various forms of terminals operating according to different communication protocols can use unlicensed frequency bands only when regulations are met, so that spectrum resources are fairly and efficiently used. According to national and regional regulation requirements for using an unlicensed frequency band, in an example of a 5 GHz frequency band, for accessing a 20 MHz channel, a requirement for a minimum occupied channel bandwidth (Occupied Channel Bandwidth, OCB) needs to be met for accessing the channel. Usually, the minimum OCB is at least 80% of a normal bandwidth. In an example of 20 MHz, a bandwidth of at least 16 MHz needs to be occupied for preempting the 20 MHz channel. A 3GPP NR-U system introduces a concept of interlaced resource block (interlaced resource block), and defines interlace $m \in \{0, 1, ..., M-1\}$ as including $\{m, M+m, 2M+m, 3M+m, ...\}$ RBs. When a subcarrier spacing is 15 kHz, M=10. When a subcarrier spacing is 30 kHz, M=5. As shown in the following figure, for a 15 kHz SCS, there are 10 interlaces, and each interlace uses a tenth PRB.

To comply with regulations, the 3GPP organization classifies LBT mechanisms in NR systems into the following four types:

Category 1 LBT (category 1 LBT): After obtaining channel occupancy time (channel occupancy time, COT), a communication device sends data immediately after a short switching gap (switching gap) from a receiving state. This is referred to as Cat 1 LBT. The COT refers to a time period in which the communication device is allowed to occupy a channel after successfully accessing the channel, where a time period of the switching gap cannot be greater than 16 $\mu$s.

Category 2 LBT (category 2 LBT): LBT without random back-off is referred to as Cat 2 LBT. To be specific, after sensing that a channel is in an idle state and lasts for a fixed time period, a communication device can send data without performing random back-off.

Category 3 LBT (category 3 LBT): Random back-off LBT with a fixed-size contention window (contention window) is referred to as Cat 3 LBT. To be specific, a communication device generates a random number N based on a fixed-size contention window, and may send data after sensing that a channel is in an idle state and lasts for a time period determined based on the random number N. A size of the contention window is related to a minimum value and a maximum value of N.

Category 4 LBT (category 4 LBT): Random back-off LBT with a variable-size contention window is referred to as Cat 4 LBT. To be specific, a communication device generates a random number N based on a variable-size contention window, and may send data after sensing that a channel is in an idle state and lasts for a time period determined based on the random number N. A size of the contention window is related to a minimum value and a maximum value of N, and the communication device may change the size of the contention window.

As described below, in the NR-U protocol, an NR-U device complies with the 3GPP protocol and uses an LBT mechanism as a channel access method. The NR-U device may use the following types of LBT mechanisms:

Type 1 LBT: Cat 4 LBT. The NR-U device needs to perform random back-off before accessing a channel and sending data.

Specifically, after sensing that the channel is idle in a sensing slot duration (sensing slot duration) of a defer sensing duration (defer sensing, denoted as T_d), and after a counter N in the following step 4 is zero, a network device or a terminal device may initiate information transmission. Specifically, according to the following steps, the counter N is adjusted by sensing a channel to obtain an additional sensing slot duration.

(1) Set $N = N_{init}$, where $N_{init}$ is a random number uniformly distributed between 0 and $CW_p$, and perform step 4.

(2) If $N > 0$, and the network device or the terminal device selects a countdown counter, set $N = N - 1$.

(3) Sense the channel at a time granularity of $T_{sl}$=9 $\mu$s, and if the channel is idle at the sensing time granularity, go to step 4; otherwise, go to step 5.

(4) If $N = 0$, stop; otherwise, perform step 2.

(5) Continue sensing the channel, until it is sensed, in one $T_{sl}$ in other $T_d$, that the channel is busy, or it is sensed that the channel is sensed as idle in all sensing slots $T_{sl}$ in other $T_d$.

(6) If the channel is sensed to be idle in all the sensing slots $T_{sl}$ in other $T_d$, perform step 4; otherwise, perform step 5.

$T_d$ includes a duration $T_f$ = 16 $\mu$s and following $m_p$ contiguous sensing slot durations (denoted as $T_{sl}$), and

$CW_{min,p} \leq CW_p \leq CW_{max,p}$ is a contention window.

$CW_{min,p}$ and $CW_{max,p}$ are selected before step 1 of the preceding procedure. $m_p$, $CW_{min,p}$, and $CW_{max,p}$ are based on a channel access priority class $p$ associated with transmission of the network device or the terminal device, as shown in Table 4:

Table 4 Reference table of priority parameters

| Channel access priority class (p) | $m_p$ | $CW_{min,p}$ | $CW_{max,p}$ | $T_{mcot,p}$ | $CW_p$ size allowed |
|---|---|---|---|---|---|
| 1 | 1 | 3 | 7 | 2 ms | {3, 7} |
| 2 | 1 | 7 | 15 | 3 ms | {7, 15} |
| 3 | 3 | 15 | 63 | 8 or 10 ms | {15, 31, 63} |
| 4 | 7 | 15 | 1023 | 8 or 10 ms | {15, 31, 63, 127, 255, 511, 1023} |

In unlicensed sidelink transmission, a channel access priority parameter table is different from the above table, as shown in Table 5.

Table 5 Reference table of priority parameters in unlicensed sidelink transmission

| Channel access priority class (p) | $m_p$ | $CW_{min,p}$ | $CW_{max,p}$ | $T_{mcot,p}$ | $CW_p$ size allowed |
|---|---|---|---|---|---|
| 1 | 2 | 3 | 7 | 2 ms | {3,7} |
| 2 | 2 | 7 | 15 | 4 ms | {7, 15} |
| 3 | 3 | 15 | 1023 | 6 or 10 ms | {15, 31, 63, 127, 255, 511, 1023} |
| 4 | 7 | 15 | 1023 | 6 or 10 ms | {15, 31, 63, 127, 255, 511, 1023} |

Same as the priority, a smaller channel access priority class value indicates a higher corresponding channel access priority.

Channel occupancy time COT for transmission of the network device or the terminal device on a channel does not exceed $T_{mcot,p}$, and a channel access procedure is performed based on a channel access priority class $p$ associated with transmission of the network device or the terminal device.

The network device or the terminal device maintains a contention window value $CW_p$, and adjusts the value of $CW_p$ according to the following steps before step 1 in the foregoing back-off.

For each priority class $p \in \{1,2,3,4\}$, set $CW_p = CW_{min,p}$.

In a HARQ-ACK feedback value corresponding to data sent by the network device or the terminal device in a reference subframe $k$, if at least Z=80% is determined as a NACK, increase a value of $CW_p$ corresponding to each channel access priority class $p \in \{1,2,3,4\}$ to a next higher allowed value, and continue to perform ACK/NACK determining in step 2; otherwise, perform step 1 of setting $CW_p = CW_{min,p}$. The reference subframe $k$ is a start subframe of latest transmission performed by the network device or the terminal device on the channel.

Type 2A LBT: Cat 2 LBT with a gap of 25 $\mu$s. After sensing that a channel is idle for 25 $\mu$s, the NR-U device may access the channel and send data.

Type 2B LBT: Cat 2 LBT with a gap of 16 $\mu$s. After sensing that a channel is idle for 16 $\mu$s, the NR-U device may access the channel and send data.

Type 2C LBT: Cat 1 LBT with a gap up to 16 $\mu$s. The NR-U device does not need to sense a channel, and may directly access the channel and send data after a switching gap of up to 16 $\mu$s in the COT.

When the NR-U device and Wi-Fi coexist, types of devices that perform an LBT mechanism can be classified into load based equipment (load based equipment, LBE) and frame based equipment (frame based equipment, FBE).

The LBE can perform channel sensing and contention access at any time point without considering a frame boundary.

The FBE is allowed to obtain COT only through contention access to a channel on a frame boundary synchronized in a system. The "frame" herein represents a fixed frame period (fixed frame period, FFP). A specific period value is configured by using RRC signaling. For example, the period value may be 1 ms, 2 ms, 2.5 ms, 4 ms, 5 ms, and 10 ms, and can evenly divide a duration (20 ms) of two radio frames.

After a current terminal apparatus completes LBT, continuous channel occupancy time COT may be obtained. The channel occupancy time is total time for eNB/gNB/UE and any eNB/gNB/UE occupying a shared channel to perform transmission on the channel after the eNB/gNB/UE performs a corresponding channel access procedure. In addition, the terminal apparatus may share a resource in the COT with another terminal apparatus. Currently, the following two solutions are available for resource sharing:

Manner 1: COT sharing based on reserved resources

To be specific, when sending data, a terminal apparatus may reserve a resource to be used subsequently based on SCI. Then, a terminal apparatus that preempts COT after LBT is completed may determine, based on received SCI for reserving a resource, whether another terminal apparatus reserves a resource in the COT, and share the resource in the COT with the terminal apparatus that reserves the resource.

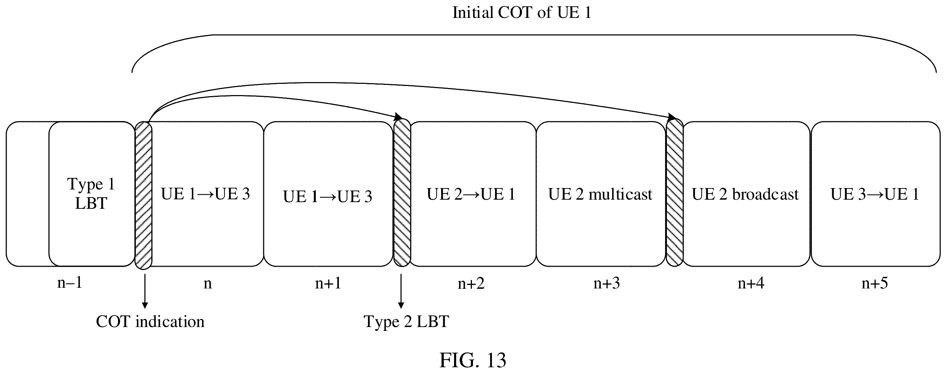

As shown in FIG. 13, a terminal apparatus UE 1 completes LBT in a slot n-1 and a slot preceding the slot n-1, and obtains COT. Before obtaining the COT, the terminal apparatus UE 1 senses that UE 2 reserves resources in a slot n+2, a slot n+3, and a slot n+4, and UE 3 reserves a resource in a slot n+4. In this case, the UE 1 may send COT sharing indication information to notify the UE 2 and the UE 3 that the UE 2 and the UE 3 can use the resources at respective reserved locations.

Manner 2: Open COT sharing

Regardless of whether a resource is reserved, a terminal apparatus may share a resource in the COT with another terminal apparatus. However, in this case, a location of a specific time-frequency resource shared with a specific terminal may need to be indicated, to avoid a sending conflict caused by different terminals using a same shared resource.

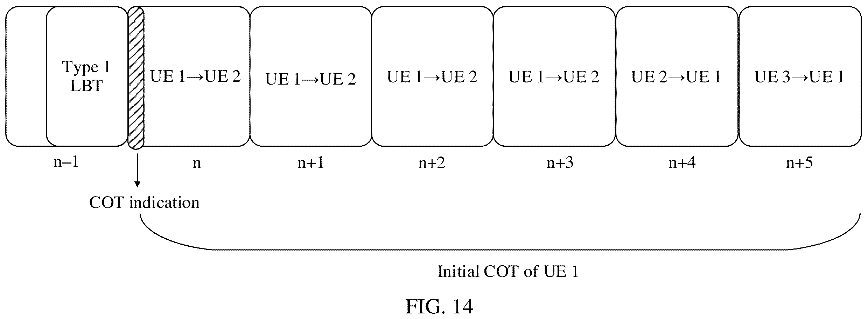

As shown in FIG. 14, after obtaining COT, UE 1 may share a remaining resource with other UE after using a part of resources in the COT, that is, the UE 1 uses resources in a slot n to a slot n+3, and shares resources in a slot n+4 and a slot n+5 with UE 2 and UE 3.

In whichever COT sharing manner, it is necessary to indicate to specific UE that the UE can use the shared COT. Correspondingly, in reservation-based COT sharing, which UE can use a reserved resource and a specific time-frequency resource location may need to be indicated. In an open sharing scenario, which UE needs to use which time-frequency resource needs to be specifically indicated.

Specifically, notification information may be carried in COT sharing indication (COT sharing indication) information, and the indication information may be carried in 1st-stage SCI, 2nd-stage SCI, or a MAC CE (Media Access Control Element, media access control control element). The following analyzes a manner in which the 2nd-stage SCI carries the COT sharing indication information.

An Additional ID needs to be further added in the COT sharing indication information to indicate which UE needs to use a shared resource. The UE with which the resource is shared can know, only when a specific indication is given, that the shared COT resource can be used.

The 2nd-stage SCI has 140 bits in total, and bits that need to be used are shown in Table 6, and 41 bits in total are used. Furthermore, in addition to a 41-bit field shown in the table, a field that may need to be additionally carried includes a channel access priority class (channel access priority class, CAPC) value and an RB set indication, each of which requires 2 bits. Therefore, a maximum of 95 remaining bits may be used to carry the COT sharing indication information.

Table 6 Used bits in the 2nd-stage SCI

| Field | Quantity of required bits |
|---|---|
| HARQ process number (HARQ process number) | 4 |
| New data indicator (New data indicator) | 1 |
| Redundancy version (Redundancy version) | 2 |
| Source ID (Source ID) | 8 |
| Destination ID (Destination ID) | 16 |
| HARQ feedback enabled/disabled indicator (HARQ feedback enabled/disabled indicator) | 1 |
| CSI request (CSI request) | 1 |
| COT duration (COT duration) | 6 |
| Channel access type (Channel Access Type) | 2 |
| Total | 45 |

However, the foregoing method does not involve a design of COT sharing indication information in the SL-U. To be specific, COT resource sharing cannot be implemented between UEs in SL communication only by reusing the foregoing method without an additional design for the COT sharing indication information. In view of this, embodiments of this application provide a sidelink COT resource sharing method.

4. Priority of sidelink information

It should be understood that in an example in which the sidelink information is sidelink data, the priority of the sidelink information may be a priority of a PSSCH for carrying the sidelink information, or may be a service priority of the sidelink information.

For example, a priority class of the sidelink information may include 1, 2, 3, ..., and 8. A smaller priority class of the sidelink information indicates a higher priority of the sidelink information. For example, a priority corresponding to the priority class 1 of the sidelink information is higher than a priority corresponding to the priority class 2 of the sidelink information, the priority corresponding to the priority class 2 of the sidelink information is higher than a priority corresponding to the priority class 3 of the sidelink information, and so on.

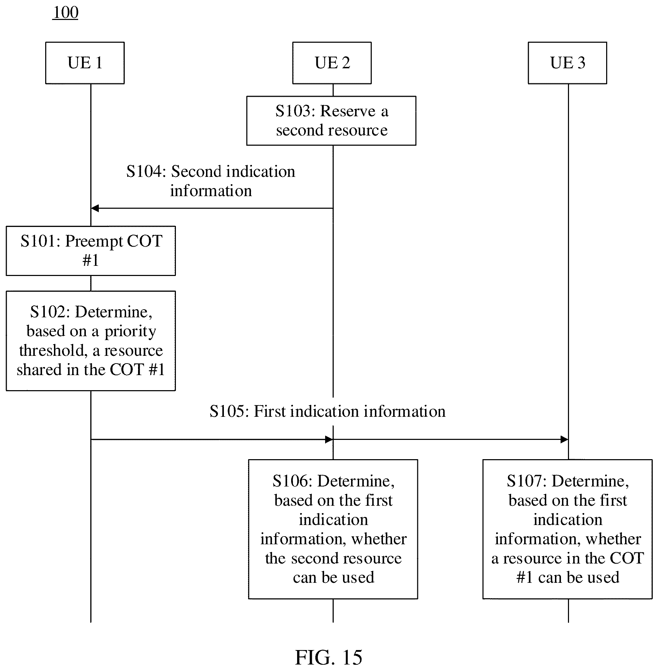

FIG. 15 is a diagram of a sidelink COT sharing method 100 according to an embodiment of this application. The following are shown in the figure.

S101: UE 1 (that is, a first terminal apparatus) preempts COT #1. Specifically, the UE 1 determines the channel occupancy time COT #1 (that is, first channel occupancy time COT) through a channel access procedure.

The channel access procedure may be understood as a process in which the UE 1 accesses an unlicensed spectrum channel based on an LBT mechanism and occupies the channel for a period of time based on a specific parameter. The COT may be understood as a time-frequency resource occupied by a terminal device by using the LBT mechanism, a frequency domain resource corresponding to the COT is the unlicensed spectrum channel, and a time domain resource corresponding to the COT is time at which the terminal device occupies the unlicensed spectrum channel by using the LBT mechanism.

It should be understood that, a minimum granularity of LBT in a frequency domain is a channel, which corresponds to an RB set, and is a channel with a 20 MHz bandwidth.

It should be understood that LBT used by the terminal device in the channel access procedure is not limited in this embodiment of this application. For example, the terminal device may access the channel through Type 1 LBT, or through Type 2 (including 2A, 2B, and 2C) LBT.

It should be noted that, in this embodiment of this application, COT sharing means that the UE 1 shares the COT with other UE, that is, COT sharing is performed between two or more UEs. In addition, the UE 1 that performs COT sharing may be a sender of SL communication, and the other user equipment is a receiver of SL communication. Alternatively, the UE 1 that performs COT sharing may be a receiver of SL communication, and the other user equipment is a sender of SL communication. Generally, the user equipment that first sends data generates COT sharing indication information. In other words, the UE 1 and the other UE have a same structure, but the UE 1 is a side that first sends data, and therefore may generate the COT sharing indication information.

In addition, COT sharing may be understood as that the UE 1 indicates, based on the sharing indication information, that the other UE can use a resource in initial COT of the UE 1.

Optionally, when using a resource in shared COT, UE with which the resource is shared sends data to at least UE of initial COT on the resource. For example, when the UE 1 shares a resource in the COT with UE 2, the UE 2 sends data to at least the UE 1 on the resource.

Optionally, the shared resource may be a PSSCH, or may be a PSFCH.

S102: The UE 1 determines, based on a priority threshold, a resource (that is, a first resource) shared in the COT #1.

It should be understood that the priority threshold may be determined by the UE 1 of the initial COT. As an example rather than a limitation, the priority threshold may be a highest priority of a plurality of to-be-transmitted TBs or a plurality of data packets in the COT #1.

Optionally, the priority threshold may be a lowest priority of a plurality of to-be-transmitted TBs or a plurality of data packets in the COT #1.

Optionally, the priority threshold may be a priority of data sent in a 1st slot in the COT #1.

Optionally, the priority threshold may be a priority threshold configured or preconfigured for the UE 1, and the priority threshold may be a priority threshold configured in a resource pool.

Optionally, the priority threshold may be a lowest priority of reserved resources in resources determined by the UE 1 for sharing in the COT #1. For example, the initial COT #1 of the UE 1 includes four slots, a to-be-sent data priority in a slot #1 is 5, a to-be-sent data priority in a slot #2 is 1, a to-be-sent data priority in a slot #3 is 2, a to-be-sent data priority in a slot #4 is 5, and the UE 1 senses that priorities of resources reserved by other UEs in the slots #2, #3, and #4 are respectively 2, 3, and 4. In a priority-by-priority comparison manner, the UE 1 shares a resource in the slot #4, and resources in the other slots are not shared. In this case, it may be indicated that the priority threshold is 4, that is, it is determined that a shared resource that can be used corresponds to the lowest priority of the reserved resources.

Correspondingly, in the slot #3, the UE 1 may not reserve time for the UE 2 to perform channel access, to ensure that other UEs cannot use a resource in the slot #3 in the COT.

It should be understood that a higher priority indicates a lower corresponding priority value. For example, a priority whose priority value is 1 is higher than a priority whose priority value is 2.

Further, the UE 1 determines, based on the priority threshold, whether to share a resource in the COT #1, or the UE 1 determines, based on the priority threshold, whether to use a resource in the COT #1. The following provides specific descriptions in these two cases:

Case 1: COT sharing based on resource reservation

It should be understood that, because the SL-U supports UE to reserve a resource, and the UE 1 of the initial COT can determine, by sensing resource reservation information of other UE, whether there is a resource reserved by the other UE in the COT #1 and a priority of to-be-transmitted data on the reserved resource, the UE 1 can determine, based on the priority threshold, whether to share the resource reserved by the other UE in the COT #1.

That the UE 1 senses the resource reservation information of the other UE may be that the UE 1 obtains, by receiving SCI information sent by the other UE, a location of the resource reserved by the other UE and a priority corresponding to the reserved resource.

In this case, before S101, the COT sharing method 100 further includes S103.

S103: The UE 2 reserves a second resource.

Optionally, the COT sharing method 100 further includes S104: The UE 2 sends second indication information to the UE 1.

The second indication information indicates a time domain position of the second resource reserved by the UE 2, or a time domain position and a frequency domain position of the second resource reserved by the UE. This is not limited in this embodiment of this application.

Correspondingly, the UE 1 receives the second indication information, and the UE 1 determines, based on the second indication information, that the second resource reserved by the UE 2 is in the COT #1 obtained by the UE 1.

Further, the UE 1 determines, based on the preset priority threshold and a priority of the second resource (that is, a priority of data to be sent on the second resource reserved by the UE 2), whether to share the second resource with the corresponding UE 2.

Specifically, when performing resource selection, the UE 1 does not select a resource whose priority is higher than or equal to the priority threshold.

In a possible implementation, the physical layer reports the priority threshold to a medium access control (Medium Access Control, MAC) layer, so that the MAC layer does not select a time-frequency resource whose priority is higher than the priority threshold when selecting a resource from a resource set SA (refer to the resource selection process, and details are not described herein again).

In this manner, the physical layer needs to report, to the MAC layer, resource reservation information of other UE that is additionally sensed, or a resource set reserved by the other UE, and the MAC layer determines a location of a potential shared resource.

Optionally, the priority threshold is directly determined by the medium access control (Medium Access Control, MAC) layer based on the to-be-transmitted data.

In another possible implementation, when performing resource exclusion, the UE 1 excludes reserved resources whose priorities are higher than the priority threshold, and reports this resource set and the resource set SA to the MAC layer. Finally, the MAC layer selects resources together in the resource selection process, and indicates the physical layer to share the resources with other UEs.

It should be understood that, in this manner, the priority threshold may be indicated by the MAC layer to the physical layer. In other words, the priority threshold may be determined by the MAC layer, and the priority threshold is determined by the MAC layer based on the to-be-transmitted data.

In another possible implementation, when determining at least one second resource reserved by the UE 2, the UE 1 may report the at least one second resource to the MAC layer. The MAC determines, based on the priority threshold, whether to share the reserved resource, and/or the MAC determines, based on the priority threshold and the resource reserved by the UE 2, a location of a resource selected by the UE 1. This step may be completed before the COT is obtained, and during resource selection.

It should be understood that, after determining whether to share the second resource with the corresponding UE 2, the UE 1 generates first indication information, to indicate that a resource in the COT #1 is shared with the UE 2.

It should be understood that when the UE 1 fails to receive the reservation information of the UE 2, the first indication information further needs to include the priority threshold.

S105: The UE 1 sends the first indication information to the UE 2, where the first indication information includes the priority threshold.

Correspondingly, the UE 2 receives the first indication information from the UE 1.

The first indication information may be sent in the 1st slot in the COT #1 determined by the UE 1, or may be sent in each slot in the COT #1. This is not limited in this embodiment of this application.

Optionally, the first indication information sent in each slot may differ. For example, the first indication information may be dynamically updated with sending moments.

In a possible implementation, the first indication information may be additionally indicated. For example, the first indication information may be carried in 1st-stage SCI, the priority threshold may be carried in 2nd-stage SCI, or the priority threshold may be carried in a MAC CE. This is not limited in this embodiment of this application.

In another possible implementation, the UE 1 may reuse a priority in current SCI as the priority threshold, to implicitly indicate a time-frequency resource location of a shared COT resource. Further, it is considered that priorities of data to be sent by the UE 1 of the initial COT in different slots in the COT may be different, and the reused SCI may be SCI of data sent by the UE 1 in the 1st slot in the COT #1, or the SCI may be SCI of a slot in which the first indication information successfully decoded by the UE 2 is located. This is not limited in this embodiment of this application.

In addition, the first indication information further includes resource information of the COT #1 (that is, resource information of first COT), so that UE receiving the first indication information can determine the resource information of the COT #1. The resource information includes information about all or a part of resources in the COT #1. This is not limited in this embodiment of this application.

Optionally, the resource information of the COT includes but is not limited to one or more of a channel access priority CACP, a COT time domain start position, a COT duration, and a position of an RB set included in the COT in frequency domain.

For example, if the COT #1 includes a slot n, a slot n+1, and a slot n+2, the resource information may include a resource in the slot n, a resource in the slot n+1, and a resource in the slot n+2, or the resource may include one or two of the resource in the slot n, the resource in the slot n+1, and the resource in the slot n+2.

Optionally, the first indication information further includes an Additional ID (that is, a first identifier) to indicate UE that can use the shared COT. Specifically, the UE 1 determines, based on the priority threshold, which UE can use the shared COT in S102, to determine, based on the priority threshold, a quantity of UEs with which the COT can be shared, that is, a quantity of Additional IDs and specific Additional IDs.

Optionally, the first indication information may be a first identifier pair, and the UE 1 may further indicate, based on an Additional ID pair (Additional ID pair), UE that can use the shared COT. Each Additional ID pair includes both a service ID of the UE 1 and an ID of UE with which the COT is shared or a service ID. The service ID of the UE 1 is used by the UE with which the COT is shared to determine to use a shared resource for sending to the UE of the initial COT.

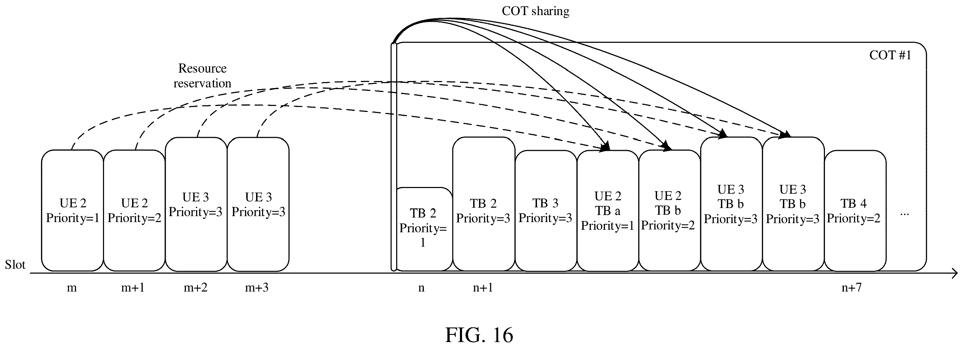

As an example rather than a limitation, as shown in FIG. 16, the UE 1 initializes COT in a slot n, that is, obtains COT by performing Type 1 channel access, and senses that in slots m to m+3, the UE 2 and the UE 3 reserve resources in slots n+3 to n+6 in the COT of the UE 1, and priorities thereof are 1, 2, and 3 respectively. However, the UE obtains that priorities of data that the UE needs to send in the COT are 2 and 3. In this case, the UE 1 performs priority comparison, and determines that only slots whose priorities are higher than or equal to 2 are shared, that is, the slot n+1 and the slot n+2. In this case, when COT sharing indication information (that is, first indication information) is sent in the slot n, one priority threshold PriorityThreshold=2 may be indicated, and the shared COT can be used by only reservations whose priorities are higher than or equal to 2. Therefore, a quantity of UEs with which the COT can be shared and that are determined by the UE 1 is 2, respectively the UE 2 and the UE 3, and the UE 1 generates two Additional IDs, and values of the two Additional IDs are respectively UE2 and UE3, or the UE 1 generates two Additional ID pairs, whose values are respectively <UE1, UE2> and <UE2, UE3>.

S106: The UE 2 determines, based on the first indication information, whether the second resource can be used.

Specifically, after obtaining, through parsing, the priority threshold carried in the indication information, the UE 2 receiving the first indication information needs to compare the priority of the reservation with the priority threshold, to determine whether the reserved second resource can be used.

It should be understood that before determining, based on the priority threshold, whether the shared time-frequency resource can be used, the UE 2 further determines, based on the resource information of the COT #1 included in the first indication information, that the time domain position of the reserved second resource is in the COT #1. Further, the UE 2 determines, based on the priority threshold included in the first indication information and the priority of the data to be sent on the second resource, whether the second resource can be used, that is, when the priority of the data to be sent on the second resource is higher than or equal to the priority threshold, the UE 2 determines that the second resource can be used.

It should be understood that resources that can be used and that is determined by the UE 2 may be all or a part of the resources shared by the UE 1 in the COT #1. In other words, the UE 1 may correspondingly share, with one or more UEs that reserve resources in the COT #1, resources whose priorities are higher than or equal to the priority threshold in the COT #1 for use.

Optionally, when the first indication information includes a CAPC, the UE 2 can use the shared resource only when a channel access priority CAPC of the to-be-transmitted data of the UE 2 is higher than the CAPC indicated in the first indication information.

Optionally, when the UE 2 sends the data on the shared time-frequency resource (that is, a third resource), destination receiving UE of the data includes at least the UE 1, that is, the UE 2 sends the data to at least the UE 1 on the time-frequency resource.

It should be understood that the shared time-frequency resource (that is, the third resource) that can be used in the COT #1 and that is determined by the UE 2 may be all or a part of the time-frequency resource reserved by the UE 2 in the COT #1. A reason is that priorities of data to be sent by the UE 2 in different slots in the COT #1 may be different, and the UE 2 can use only a time-frequency resource whose priority is higher than the priority threshold in the reserved resource.

Specifically, when the second resource reserved by the UE 2 includes a plurality of slots for sending data of different priorities, the UE 2 determines, based on the priority threshold included in the first indication information and priorities of to-be-sent data in the plurality of slots in the second resource, whether all or a part of the second resource can be used.

As an example instead of a limitation, the UE 1 obtains COT by performing channel access in a slot n, and the UE 2 reserves resources in the slot n to a slot n+2 in the COT to respectively send data #1, data #2, and data #3. Priorities of the data #1, the data #2, and the data #3 are respectively 3, 2, and 1. When the priority threshold included in the first indication information is 2, and the COT can be shared only when a priority of data is higher than or equal to the priority threshold, after receiving the first indication information, the UE 2 can determine, based on the priority threshold, that the data #2 and the data #3 can be sent in the slot n+1 and the slot n+2.

In a possible implementation, when the first indication information includes an Additional ID (that is, a first identifier), the UE 2 can further determine, by determining whether there is an Additional ID indicating the UE 2, whether the UE 2 can use the second resource.

It should be understood that the first indication information may include a plurality of Additional IDs or a plurality of Additional ID pairs, which respectively indicate a plurality of UEs with which resources are shared. UE receiving the first indication information can determine, based on only the Additional IDs (or Additional ID pairs), whether the UE can use a reserved resource, or the UE receiving the first indication information can determine, based on whether an Additional ID (or an Additional ID pair) of the UE is indicated and the priority threshold in the first indication information, whether the UE can use a reserved resource. This is not limited in this embodiment of this application.

As an example rather than a limitation, the UE 2, the UE 3, and UE 4 separately reserve a resource in COT #3 obtained by the UE 1, and the UE 1 generates, based on the priority threshold and priorities of data to be sent by the UE 2, the UE 3, and the UE 4 on the reserved resources, two Additional IDs whose values are respectively UE3 and UE4. After receiving the first indication information, the UE 3 and the UE 4 determine that the resources reserved in the COT #3 can be used. Correspondingly, after receiving the first indication information, the UE 2 can determine, only based on that the first indication information does not include the Additional ID indicating the UE 2, that the resource reserved in the COT cannot be used. Alternatively, the UE 2 can determine, based on that the first indication information does not include the Additional ID indicating the UE 2 and that the priority of the data to be sent on the resource reserved by the UE 2 in the COT #3 is lower than the priority threshold, that the resource reserved in the COT cannot be used.

It should be noted that, when the UE 2 reserves a plurality of slots for sending data in the COT obtained by the UE 1, even if the UE 1 determines, based on the priority threshold, to share the resources in the plurality of slots with the UE 2, the UE 1 generates only one Additional ID whose value is UE2 or an Additional ID pair whose value is <UE1, UE2>.

It should be understood that after the UE 2 determines that the second resource reserved in the COT #1 can be used, the UE 2 can use the second resource according to its own implementation.

Optionally, after the physical layer determines the shared time-frequency resource (that is, the first resource) that can be used in the COT #1, the UE 2 can directly send the data packet on the time-frequency resource.

Optionally, after the physical layer determines the shared time-frequency resource (that is, the first resource) that can be used in the COT #1, the UE 2 can report the shared resource to the MAC layer, indicate that the resource is a shared resource, and indicate the MAC layer to perform resource selection.

It should be understood that, after the time-frequency resource that can be used is determined, the UE 2 further needs to perform Type 2 channel access before the shared resource, or needs to switch from Type 1 channel access to Type 2 channel access before the shared resource.

Case 2: Open COT sharing

In this case, the UE 2 does not reserve a resource in the COT. After determining, in S102, the resource shared in the COT #1, the UE 1 generates first indication information, where the first indication information includes the priority threshold. For a detailed process in which the UE 1 determines resources shared in the COT #1, refer to the case 1. Details are not described herein again.

S105: The UE 1 sends the first indication information to UE 3. Optionally, the first indication information includes the priority threshold.

Correspondingly, the UE 3 receives the first indication information from the UE 1.

The first indication information may additionally perform indication, or the UE 1 may reuse a priority in current SCI as the priority threshold. For a specific manner, refer to the case 1. Details are not described in this embodiment of this application.

In addition, the first indication information further includes resource information of the COT #1 (that is, resource information of first COT), so that UE receiving the first indication information can determine the resource information of the COT #1. The resource information includes information about all or a part of resources in the COT #1. This is not limited in this embodiment of this application.

S107: The UE 3 determines, based on the first indication information, whether a resource in the COT #1 can be used.

After obtaining, through parsing, the priority threshold carried in the indication information, the UE 3 receiving the first indication information needs to compare a priority of data (or to-be-sent data) that is expected to be sent in the COT #1 with the priority threshold, to determine whether a shared time-frequency resource in the COT #1 can be used, and further determine the shared time-frequency resource (that is, a third resource) that can be used in the COT #1.

It should be understood that before determining, based on the priority threshold, whether the shared time-frequency resource can be used, the UE 3 further determines, based on the resource information of the COT #1 included in the first indication information, the resource information of the COT #1 shared by the UE 1.

Further, the UE 3 determines, based on the priority threshold included in the first indication information and the priority of the to-be-sent data, whether the resource shared in the COT #1 can be used, that is, when the priority of the to-be-sent data is higher than or equal to the priority threshold, the UE 3 determines that the resource shared in the COT #1 can be used to send the to-be-sent data.

As an example rather than a limitation, the UE 1 shares the COT #1 from the slot n to the slot n+3 with the UE 3 based on the first indication information, and indicates, based on the first indication information, that the priority threshold is 2. After receiving the first indication information, the UE 3 determines, based on a priority equal to 1 of data that the UE 3 expects to send in the COT #1, that the UE 3 can send the data in the COT #1, and selects all or a part of time-frequency resources in the slot n to the slot n+3 to send the data.

It should be understood that the resource (that is, the third resource) that can be used and that is determined by the UE 3 may be all or a part of resources shared by the UE 1 in the COT #1.

Optionally, when the UE 3 sends the data on the shared time-frequency resource, destination receiving UE of the data includes at least the UE 1, that is, the UE 3 sends the data to at least the UE 1 on the time-frequency resource.

Optionally, when the first indication information includes a CAPC, the UE 3 further needs to compare a CAPC corresponding to the to-be-sent data of the UE 3 and the indicated CAPC. The shared resource can be used only when the CAPC corresponding to the to-be-sent data is higher than the indicated CAPC.

Optionally, the first indication information includes licensing indication information of a PSFCH resource (that is, a sharing and licensing information of the PSFCH resource), and indicates that the PSFCH resource in the COT #1 can be shared.

Optionally, the licensing indication information of the PSFCH resource may be indicated by using one bit or a plurality of bits.

In a possible implementation, the licensing indication information of the PSFCH resource can use 1 bit to indicate that any responding device (an example of a third terminal apparatus) can use the shared PSFCH resource, or indicate that the responding device cannot use the shared resource. Correspondingly, the responding device receiving the licensing indication information of the PSFCH resource can send feedback information on the shared PSFCH resource in the COT #1, or cannot use the shared PSFCH resource.

Optionally, the licensing indication information of the PSFCH resource may alternatively be replaced with PSFCH sharing indication information.

Optionally, the licensing indication information of the PSFCH resource may alternatively indicate that any terminal device (another example of a third terminal apparatus) can use the shared PSFCH resource. Compared with a limitation that only the responding apparatus can use the shared PSFCH resource, resource utilization can be further improved.

It should be understood that the shared PSFCH resource may be all or a part of a PSFCH resource in the first COT.

It should be understood that the responding device can determine, and use, based on the PSFCH licensing information and the PSSCH resource used by the responding device, the PSFCH resource that is licensed for use.

The responding device can be defined as a data receive end of the UE 1 of the initial COT, or a terminal device indicated by the UE 1 based on additional identification information (for example, an Additional ID or an Additional ID pair) in the sharing indication information. Specifically, the 1-bit PSFCH licensing information may indicate true or false, or (0/1). For example, when the licensing information indicates true, it indicates that all responding devices receiving the indication information can use the shared PSFCH resource. In this way, the device with which the resource is shared uses the shared resource only after receiving the licensing information, thereby meeting a regulation requirement.

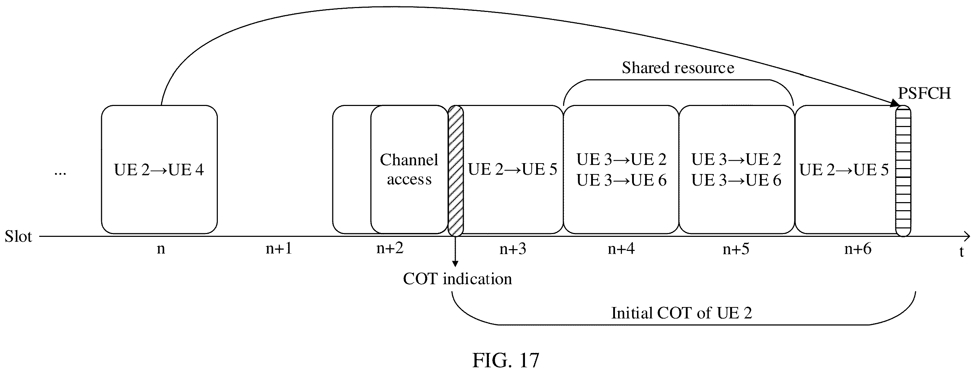

In another possible implementation, the resource licensing indication information can indicate a plurality of states by using a plurality of bits. For example, a state 1 may indicate that only a data receive end sent by a COT initiator can use the shared resource. With reference to FIG. 17, the data receive end can be defined as a receiving device (UE 5) of data sent by the UE 2 in initial COT of the UE 2, or may indicate a data receiving device (UE 4 and UE 5) of the UE 2 in a current slot and the initial COT of the UE 2, to ensure that the shared resource is used by data receiving UE, and ensure that the COT is not lost.

For example, the UE 2 indicates the UE 3 based on an Additional ID in COT indication information. In this case, a state 2 may indicate a device whose indication information is additionally indicated, that is, the UE 3 can use the shared PSFCH resource.

For example, a state 3 indicates that a data receive end of UE with which the COT is shared can send feedback on the shared PSFCH (UE 6 and UE 2).

For example, a state 4 indicates that no UE can use the shared PSFCH resource.

Apparently, compared with the state 1, the state 2 and the state 3 release a constraint on using the PSFCH resource, so that more terminal devices can perform feedback on different frequency domain resources of a same symbol, thereby improving resource utilization.

It should be understood that feedback information sent on the shared PSFCH resource may be ACK/NACK feedback, or may be feedback in a NACK only form. This is not limited in this embodiment of this application.

It should be understood that, in another possible implementation, any plurality of states in the foregoing plurality of states may be combined to form a new state, and any combination of the plurality of states may be indicated by a plurality of bits. For example, devices included in the state 1 and the state 2 may be combined into a state 5. The state 5 may indicate that the UE 5 and the UE 3 or the UE 4, the UE 5 and the UE 3 can use the shared resource.

It should be noted that the foregoing indication manner is not limited to a unicast or multicast scenario.

It should be understood that the UE 2 expects to send a plurality of pieces of data in the COT #1, priorities of the data sent in different slots are different, and the UE 2 can use only a time-frequency resource whose priority is higher than the priority threshold in the reserved resource.

As an example rather than a limitation, the UE 1 shares the COT #1 from the slot n to the slot n+3 with the UE 3 based on the first indication information, and indicates, based on the first indication information, that the priority threshold is 2. The UE 3 expects to send data #4, data #5, and data #6 in the COT #1, and priorities thereof are respectively 3, 2, and 1. After receiving the first indication information, the UE 3 determines, based on the priorities of the data that is expected to be sent, that the data #5 and the data #6 can be sent in the COT #1, and selects all or a part of time-frequency resources in the slot n to the slot n+3 to send the data #5 and the data #6.

It is easy to understand that, when UE performs COT sharing, if the UE does not indicate a location of a resource to be shared with specific UE, a transmission conflict problem that different UEs use a same resource for sending at the same time may occur.

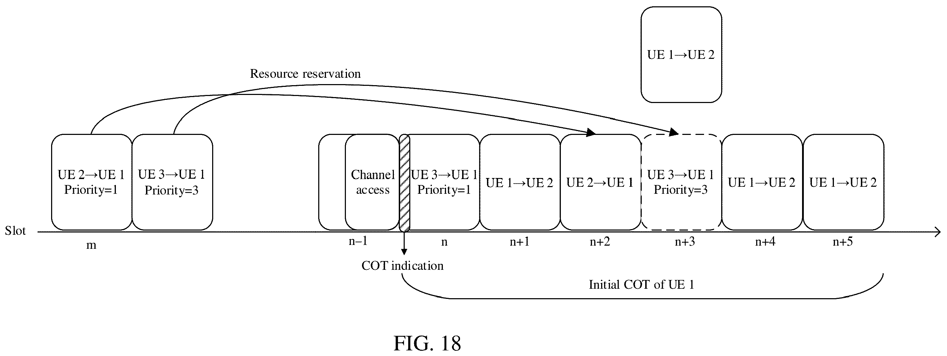

FIG. 18 is a diagram of still another COT sharing scenario. As shown in FIG. 18, UE 1 initializes COT, and senses that UE 2 and UE 3 have reserved resources in the COT of the UE 1. It is considered that a priority of the reservation of the UE 2 is higher, the UE 1 may share a resource in a slot n+2 with the UE 2, but a priority of the reserved resource of the UE 3 is lower, and the UE 1 does not share a resource in a slot n+3. However, without considering a reservation-based COT mechanism, the UE 2 needs to know the shared resource. Otherwise, the UE 2 does not know which shared resource should be used by the UE 2. Therefore, indication of the specific time-frequency resource needs to be specifically designed.

For COT resource sharing on a sidelink, an embodiment of this application further provides a method for indicating a time domain resource location, and the method can be used together with the method 100, or used based on additional indication information. In this way, overheads of COT indication information can be reduced while unlicensed spectrum resource COT sharing is implemented in the SL-U, so that when same SCI carries user information, more UEs can be indicated to use the shared resource, thereby improving resource utilization and improving overall system performance of the SL-U.

It should be understood that, in comparison with an offset for separately indicating a start position and a length, because t1<t2 exists between t1 and t2 in a TRIV, that is, a value of t2 is necessarily greater than that of t1, overheads can be reduced in a manner of indicating two resources based on the TRIV. For example, as shown in the figure, if two fields directly represent two t values, a total of 5*2=10 bits are required. In the TRIV manner, because $1 \leq t1 \leq 31$, $t1 < t2 \leq 31$, and there are only 32*31/2=496 combinations in total, only 9 bits are required, and 1 bit overhead can be reduced. It is easy to understand that, overheads are reduced because a value of t2 is necessarily greater than that of t1, that is, when the value of t1 is 10, the value of t2 is necessarily from 11 to 31, and there are only 21 values in total.

To reduce resource overheads of the COT sharing indication information, in this embodiment of this application, the TRIV is introduced into COT sharing to indicate a time domain position shared with UE.

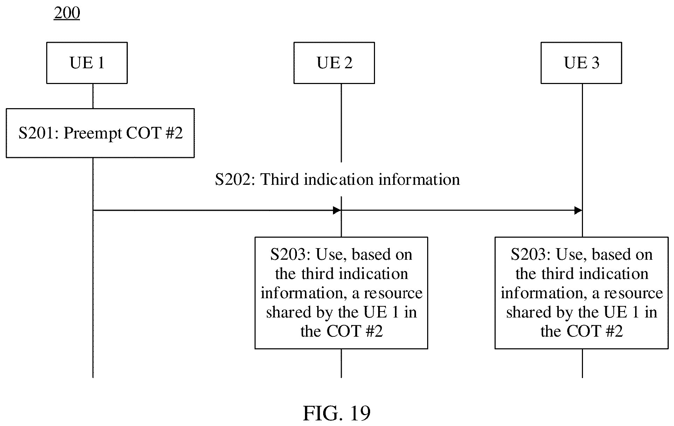

FIG. 19 is a diagram of a sidelink COT sharing method 200 according to an embodiment of this application. The following are shown in the figure.

S201: UE 1 (that is, a first terminal apparatus) preempts COT #2. Specifically, the UE 1 determines the channel occupancy time COT #2 (that is, second channel occupancy time COT) through a channel access procedure. For a process in which the UE 1 performs channel access, refer to step S101. Details are not described herein again.

It should be understood that, in COT sharing, a case of maximum COT is considered, that is, COT=10 ms. At a subcarrier spacing of 60 kHz, if a slot length is 0.25 ms, the maximum COT is 40 slots. In addition, this solution is not limited to a case in which the maximum COT is 10 ms. The maximum COT may alternatively be another value. The following design idea may alternatively be reused. For example, if COT=6 ms, and corresponding maximum COT is 24 slots.

The following separately describes in detail that the UE 1 shares a resource in the COT #2 with a single UE and a plurality of UEs.

Case 1

S202: The UE 1 sends third indication information to UE 2, where the third indication information indicates that the UE 1 is to share a resource in the COT #2 with the UE 2.

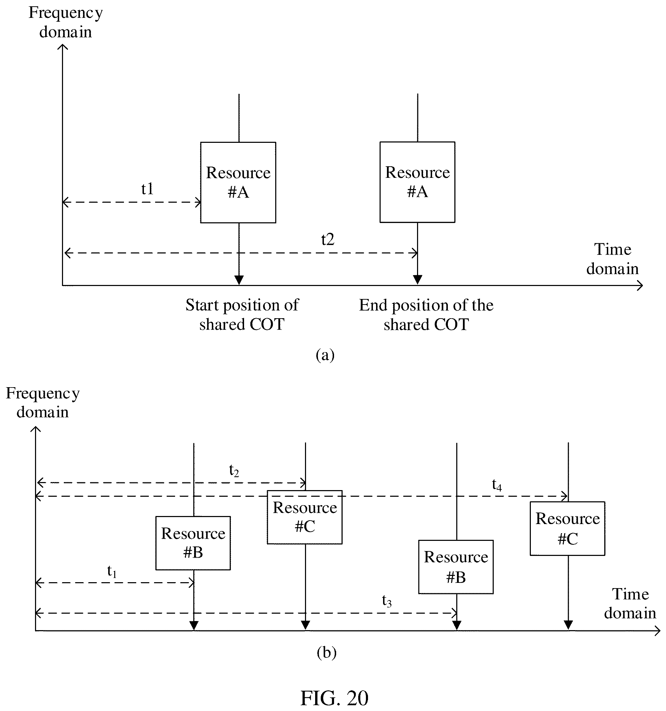

As shown in (a) in FIG. 20, the UE 1 uses a TRIV in the third indication information to indicate a start position and an end position of a resource #A (an example of a fourth resource) that can be used by the UE 2 (that is, an example of a second terminal apparatus) in time domain. It should be understood that the resource #A can include one or more slots in time domain. This is not limited in this embodiment of this application.

Manner A: t1 indicates a start time domain position of the resource #A, and t2 indicates an end time domain position of the resource #A.

Specifically, the UE may use t1 and t2 to indicate a time domain resource location of the resource #A in the shared COT #2, where $2 \leq t1 \leq 40$, and $t1 \leq t2 \leq 40$. Because the shared resource needs to start from a $2^{nd}$ slot of the COT in time domain, a minimum value of t1 is 2. When a value of t1 is 2, a value of t2 may be any value from 2 to 40, to represent a combination. In this case, all combinations may be traversed, and (39+38+...+2+1)=(1+39)*39/2=780 combinations may be obtained. Therefore, 10 bits are required in total for indication, because 2^10=1024>780.

For example, according to the foregoing TRIV design manner, the TRIV may be designed as follows:

$$\text{If } t2 - t1 \leq 19$$

$$TRIV = 39(t2 - t1) + t1 \ -1$$

$$\text{Else}$$

$$TRIV = 39(39 - t2 + t1) + 41 - t1$$

When t1=20 and T2=40, a calculated value is 820.

A corresponding TRIV table is shown in Table 7.

Table 7 TRIV

| | T1=1 | T1=2 | T1=3 | ... | T1=38 | T1=39 | T1=40 |
|---|---|---|---|---|---|---|---|
| T2=1 | 0 | 0 | 0 | ... | 0 | 0 | 0 |
| T2=2 | 0 | 1 | 0 | ... | 0 | 0 | 0 |
| T2=3 | 0 | 42 | 2 | ... | 0 | 0 | 0 |
| ... | ... | ... | ... | ... | ... | ... | ... |
| T2=38 | 0 | 156 | 194 | ... | 37 | 0 | 0 |
| T2=39 | 0 | 117 | 155 | ... | 76 | 38 | 0 |
| T2=40 | 0 | 78 | 116 | ... | 115 | 77 | 39 |

Further, it is considered that a maximum value that can be represented by 10 bits is 1024, which is far greater than 820. Therefore, the foregoing manner is not the only manner, and may be written as the following manner:

$$\text{If } t2 - t1 \leq 19$$

$$TRIV = 39(t2 - t1) + N + t1$$

Else

$$TRIV = 39(39 - t2 + t1) + 41 + N - t1$$

A value of N is greater than or equal to 0 and less than 244.

Manner B: t1 indicates a start time domain position of the resource #A, and t2 indicates a duration of the resource #A, that is, the TRIV may indicate a combination of t1 and L.

In this implementation, $2 \leq t1 \leq 40$, and $1 \leq L \leq 39$. When a value of t1 is 10, a maximum of L that may be indicated is 31, and there are 780 values in total. A corresponding indication manner may be as follows:

$$\text{If } L \leq 19$$

$$TRIV = 39(L - 1) + t1 - 1$$

Else

$$TRIV = 39(40 - L) + t1$$

In this case, a corresponding TRIV table is shown in Table 8.

Table 8 TRIV

|       | T1=1 | T1=2 | T1=3 | ... | T1=38 | T1=39 | T1=40 |
|-------|------|------|------|-----|-------|-------|-------|
| L=1   | 0    | 1    | 2    | ... | 37    | 38    | 39    |
| L=2   | 0    | 40   | 41   | ... | 76    | 77    | 0     |
| L=3   | 0    | 118  | 119  | ... | 115   | 0     | 0     |
| ...   | ...  | ...  | ...  | ... | ...   | ...   | ...   |
| L=38  | 0    | 117  | 116  | ... | 0     | 0     | 0     |
| L=39  | 0    | 78   | 0    | ... | 0     | 0     | 0     |

S203: The UE 2 uses, based on the third indication information, the resource shared by the UE 1 in the COT #2.

It should be understood that the UE 2 can use, according to an implementation of the UE 2, the resource shared by the UE 1 in the COT #2.

Optionally, after a physical layer determines the resource shared by the UE 1 in the COT #2, the UE2 can directly send a data packet on the resource.

Optionally, after the physical layer determines the resource shared by the UE 1 in the COT #2, the UE2 can report the resource to a MAC layer, indicate that the resource is a shared resource, and indicate the MAC layer to perform resource selection.

It should be understood that, after the time-frequency resource that can be used is determined, the UE 2 further needs to perform Type 2 channel access before the shared resource, or needs to switch from Type 1 channel access to Type 2 channel access before the shared resource.

Case 2

In this case, the UE 1 uses two groups of TRIVs in third indication information to indicate a start position and an end position of resources to a plurality of UEs with which the COT is shared. Specifically, one group of TRIVs indicate the time domain start position of the plurality of shared resources, and the other group of TRIVs indicate the time domain end position of the plurality of shared resources.

S202: The UE 1 sends the third indication information to UE 2 and UE 3, where the third indication information indicates that the UE 1 is to share resources in the COT #2 with the UE 2 and the UE 3.

As shown in (b) in FIG. 20, the UE 1 determines to share a resource #B and a resource #C (two examples of fourth resources) in the COT #2 with the UE 2 and the UE 3, and needs to indicate corresponding time domain resource locations.

The time domain position of the resource #B shared with the UE 2 starts from a t1 duration relative to a start position of the COT, and ends at a t3 duration, the time domain position of the resource #C shared with the UE3 starts from t2 and ends at t4.

Manner C: One group of TRIVs indicate the start time domain positions t1 and t2 of the resource #B and the resource #C, and the other group of TRIVs indicate the end time domain positions t3 and t4 of the resource #B and the resource #C.

Because the resource #B and the resource #C have a sequence relationship in time domain, t1≤t2 is used as an example, that is, 2≤t1≤40 and t1≤t2≤40. In this case, a group of TRIVs can be used to indicate start positions of the resource #B and the resource #C. For a collective indication manner, refer to the formula in the manner A. Details are not described herein again. Similarly, the end positions t3 and t4 of the resource #B and the resource #C may be indicated by the other group of TRIVs, where 2≤t3≤40, and t1≤t4≤40. An indication formula is consistent with that of t1 and t2.

Manner D: One group of TRIVs indicate a start time domain position t1 of the resource #B and a time length L1 from t1 to t3, and the other group of TRIVs indicate an end time domain position t2 and a time length L2 from t2 to t4.

S203: The UE 2 and the UE 3 use, based on the third indication information, the resources shared by the UE 1 in the COT #2.

It should be understood that the UE 2 and the UE 3 can use, according to their own implementations, the resources in the COT #2 shared by the UE 1. For a specific manner, refer to the case 1. Details are not described herein again.

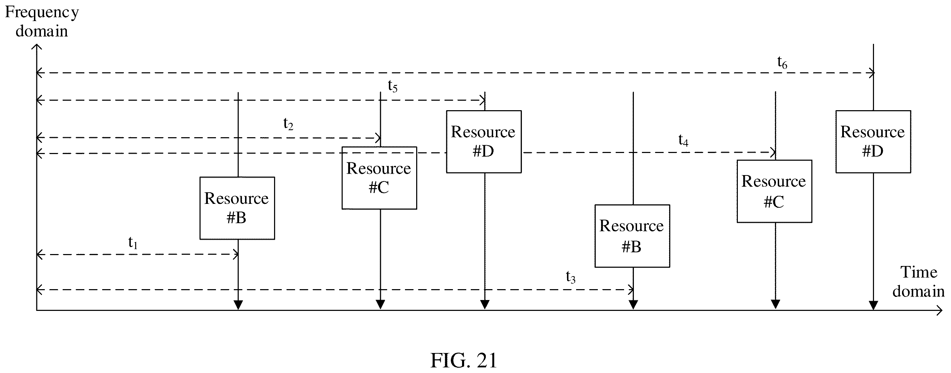

It should be understood that, in the case 2, the UE 1 may further send the third indication information to more than two UEs to indicate shared resources in the COT #2. As shown in FIG. 21, the UE 1 determines to share a resource #B, a resource #C, and a resource #D (three examples of fourth resources) in the COT with the UE 2, the UE 3, and UE 4. t1, t2, and t5 in the TRIV respectively represent time domain start positions of the resource #B, the resource #C, and the resource #D, 2≤t1≤40, t1≤t2≤40, t2≤t5≤40, and there are 10,660 valid values in total. Because 2^14=16,304, only 14 bits are required for indication.

It should be understood that a shared time domain position that is indicated for specific UE to use may also be indicated by using two independent fields, that is, one start position and one end position are indicated, or one start position and one duration are indicated. Because maximum COT is 40 slots, a single position or length indication needs 6 bits, that is, 12 bits are required to indicate a time domain position of a resource that can be used by one UE.

Therefore, compared with separately indicating a time domain position of a resource shared by three UEs, a manner of indicating a time domain position of a shared resource based on a TRIV can reduce 3*12-14=24 bits.

If a specific time domain resource location needs to be indicated, a start point and an end point in time domain of a single UE each need 6 bits for indication.

Further, a single UE needs to additionally indicate an Additional ID, and 8 bits are required. If an Additional ID of one UE and a specific time domain resource location that can be used need to be separately indicated, 12+8=20 bits are required.

In this case, 2$^{nd}$-stage SCI indicates a maximum of four UEs that can use shared resources, because (140-45)/(12+8)=4.75, where 45 bits are fixedly used to indicate other information.

However, if the TRIV indication manner provided in this embodiment of this application is used, a single UE needs only 9 bits to indicate a start position and an end position. In this case, the 2$^{nd}$-stage SCI may indicate a maximum of five UEs to use shared resources, because (140-45)/(10+8)=5.28.

For COT resource sharing on a sidelink, an embodiment of this application further provides a method for indicating a frequency domain resource location, and the method can be used together with the method 100 and the method 200, or independently used based on additional indication information. In this way, overheads of COT indication information can be reduced while unlicensed spectrum resource COT sharing is implemented in the SL-U, so that when same SCI carries user information, more UEs can be indicated to use the shared resource, thereby improving resource utilization and improving overall system performance of the SL-U.

It should be understood that in the SL-U, there are a maximum of 27 subchannels. Therefore, 5 bits are required to indicate a location of a single subchannel. However, it is considered that in an unlicensed frequency band, a 20 MHz bandwidth is an RB set, a frequency domain resource location may need to be indicated by indicating a specific RB set and a quantity of subchannels in the corresponding RB set. If a single RB set has a maximum of 10 subchannels, 4 bits are required to indicate a location of one subchannel. This solution does not limit the two scenarios.

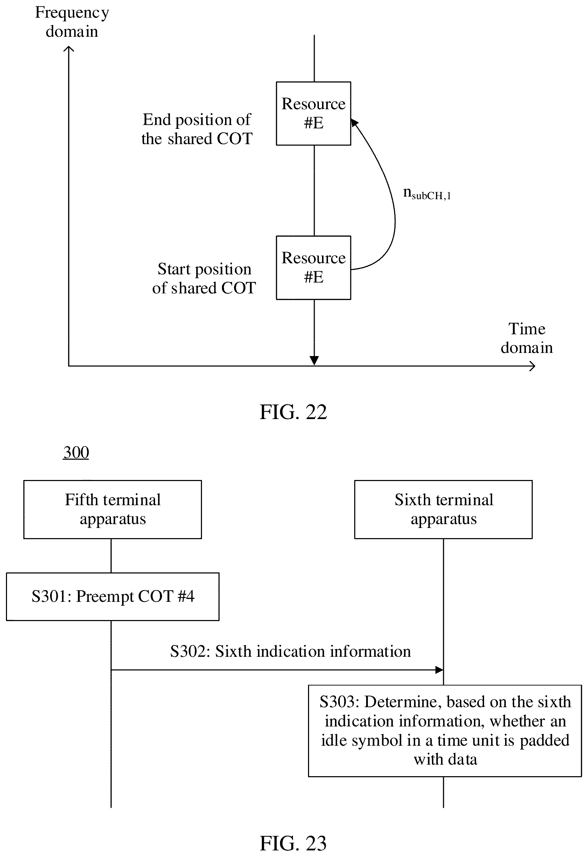

As shown in FIG. 22, a single FRIV indicates a start position and an end position in frequency domain of a frequency domain resource #E used by UE with which the resource is shared.

In a possible implementation, an FRIV uses t1 to indicate a start frequency domain position of the resource #E, and t2 to indicate an end frequency domain position of the resource #E. For a specific indication manner, refer to the TRIV. Details are not described herein again.

In another possible implementation, a start position and a frequency domain subchannel length $L_{subCH}$ of a frequency domain resource used by UE with which the resource is shared are indicated. For a specific indication manner, refer to the TRIV. Details are not described herein again.

It should be noted that a frequency domain position indicated by an FRIV may be two locations in one RB set, or may be two absolute resource locations in all RB sets.

It should be understood that this embodiment provided in this application is further applicable to a scenario in which frequency domain positions of a plurality of shared resources are indicated to a plurality of UEs. Specifically, frequency domain positions of a plurality of shared resources can be indicated by using two groups of FRIVs. One group of FRIVs indicate frequency domain start positions of the plurality of shared resources, and the other group of FRIVs indicate frequency domain end positions of the plurality of shared resources. For a specific indication manner, refer to the TRIV. Details are not described herein again.

For continuous slot transmission on a sidelink, an embodiment of this application further provides a method 300 for indicating idle symbol padding, to improve resource utilization and avoid COT interruption. Indication information indicates that the idle symbol is padded with data, to indicate a data receive end to performing data matching and corresponding decoding in time for transmission on this slot, thereby avoiding a problem that the receive end cannot correctly decode a data packet. As shown in FIG. 23, the method 300 includes the following steps.

S301: A fifth terminal apparatus preempts COT #4. Specifically, the fifth terminal apparatus determines the channel occupancy time #4 through a channel access procedure.

S302: The fifth terminal apparatus sends sixth indication information to a sixth terminal apparatus. Correspondingly, the sixth terminal apparatus receives the sixth indication information.

The sixth indication information indicates that an idle symbol in a time unit in which the sixth indication information is located is padded with data information.

S303: The sixth terminal apparatus determines, based on the sixth indication information, whether an idle symbol in a time unit in which the fifth indication information is received is padded with data.

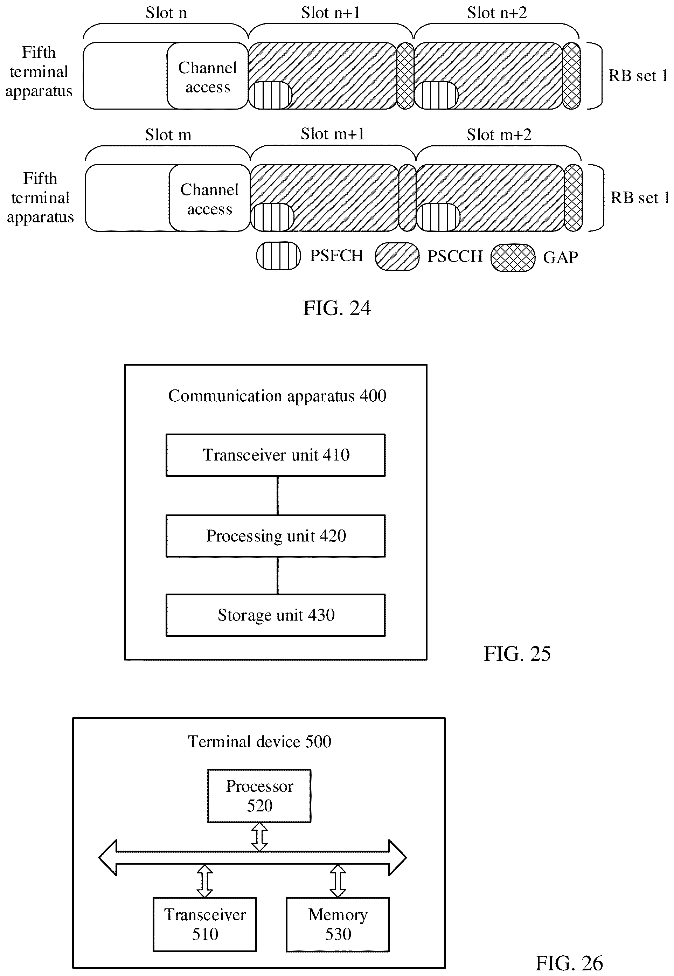

The following further describes the method 300 with reference to FIG. 24.

The fifth terminal apparatus determines to send data in a slot n+1 and a slot n+2. Based on an existing slot structure design, the fifth terminal apparatus sends data only on the first 13 symbols, and the 14th symbol reserves an idle symbol GAP. However, in an unlicensed frequency band, when the UE 5 uses all frequency domain resources on a single channel and still uses contiguous slots, an idle symbol is still reserved in this case, and other UE may execute a channel access procedure to obtain a channel, causing a sending conflict or COT interruption of the UE 5.

An embodiment of this application provides a method. A fifth terminal apparatus determines to send data in a slot m+1 and a slot m+2, and in the slot m+1, the fifth terminal apparatus pads an idle symbol with a PSSCH, to ensure continuity of COT. In addition, when all symbols in a complete slot are used to send data, a receive end is notified by sending indication information (that is, sixth indication information), so that the receive end knows that the data sent in the slot occupies all symbols and performs decoding. Therefore, a field needs to be added to SCI to indicate that a GAP symbol in a slot corresponding to a GAP is padded with PSSCH data.

Optionally, the sixth indication information may be carried in 1st-stage SCI or 2nd-stage SCI.

It should be understood that the foregoing embodiments may be used independently, or may be used in combination. This is not limited in this solution.

FIG. 25 is a block diagram of a wireless communication apparatus according to an embodiment of this application. As shown in FIG. 25, the apparatus 400 may include a transceiver unit 410 and a processing unit 420. Optionally, the apparatus may further include a storage unit 430, where the storage unit 430 is configured to store instructions.

In a possible implementation, the apparatus 400 may be a first terminal apparatus, or may be a chip or a circuit, for example, a chip or a circuit that may be disposed in the first terminal apparatus.

The processing unit 420 is configured to determine channel occupancy time COT.

The processing unit 420 is further configured to determine, based on a preset priority threshold, a resource shared in the COT.

The transceiver unit 410 is configured to send indication information, where the indication information includes one or more of the priority threshold, resource information of the COT, and licensing information of a PSFCH in the COT.

In a possible implementation, the apparatus 400 may be a second terminal apparatus, or may be a chip or a circuit, for example, a chip or a circuit that may be disposed in the second terminal apparatus.

The transceiver unit 410 is configured to receive indication information, where the indication information includes one or more of the priority threshold, resource information of the COT, and licensing information of a PSFCH in the COT.

The processing unit 420 is configured to determine a resource that can be used in the COT.

It should be understood that the units in the apparatus 400 are respectively configured to perform actions or processing processes performed by the first terminal apparatus or the second terminal apparatus in the foregoing methods. Herein, to avoid repetition, detailed descriptions are omitted.

FIG. 26 is a block diagram of a terminal device according to an embodiment of this application. As shown in FIG. 26, the terminal device 500 includes a transceiver 510, a processor 520, and a memory 530. The transceiver 510, the processor 520, and the memory 530 communicate with each other and transfer a control and/or data signal by using an internal connection path.

In a possible implementation:

The processor 520 is configured to determine channel occupancy time COT.

The processor 520 is further configured to determine, based on a preset priority threshold, a resource shared in the COT.

The transceiver 510 is configured to send indication information, where the indication information includes one or more of the priority threshold, resource information of the COT, and licensing information of a PSFCH in the COT.

In another possible implementation:

The transceiver 510 is configured to receive indication information, where the indication information includes one or more of the priority threshold, resource information of the COT, and licensing information of a PSFCH in the COT.

The processor 520 is configured to determine a resource that can be used in the COT.

It should be understood that, when the processor 520 invokes a computer program from the memory and runs the computer program, the processor 520 may be configured to perform the foregoing methods and implement a function of an execution entity of the methods, for example, a first terminal apparatus or a second terminal apparatus.

It should be understood that the foregoing embodiments may be used independently, or may be used in combination. This is not limited in this solution.

A person of ordinary skill in the art may be aware that, in combination with illustrative logical blocks (illustrative logical blocks) and steps (steps) described in embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

In the foregoing embodiments, all or a part of the functions of the functional units may be implemented by using software, hardware, firmware, or any combination thereof. When software is used to implement the embodiments, all or a part of the embodiments may be implemented in a form of a computer program product. The computer program product includes one or more computer instructions (programs). When the computer program instructions (programs) are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state disk (solid-state disk, SSD)), or the like.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, for example, a USB flash drive, a removable hard disk drive, a ROM, a random access memory (random access memory, RAM), a magnetic disk, or a compact disc.

It should be noted that, in embodiments of this application, "indicate" may include directly indicating and indirectly indicating, or may include explicitly indicating and implicitly indicating. Information indicated by information is referred to as to-be-indicated information. In a specific implementation process, the to-be-indicated information may be indicated in a plurality of manners. By way of example but not limitation, the to-be-indicated information may be directly indicated, for example, by using the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on.

Various numbers such as "first" and "second" in embodiments of this application are merely used for ease of distinguishing, and are not used to limit the scope of embodiments of this application. For example, the various numbers are used for distinguishing between different indication information or different time gaps.

In embodiments of this application, "predefined" or "preconfigured" may be implemented in a manner of prestoring corresponding code, a table, or other related indication information in a device (for example, including a terminal device and a network device). A specific implementation thereof is not limited in this application. Herein, "store" may mean storing in one or more memories. The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in this application.

The "protocol" in embodiments of this application may be a standard protocol in the communication field, and may include, for example, an LTE protocol, an NR protocol, and a related protocol applied to a future communication system. This is not limited in this application.

In embodiments of this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, and c may indicate a, b, c, a and b, a and c, b and c, or a, b, and c. Each of a, b, and c may be in a singular form or a plural form.

In embodiments of this application, the descriptions "when ...", "in a case that ...", "if", and the like all mean that a device (for example, a terminal device or a network device) performs corresponding processing in an objective case, and are not intended to limit time. The descriptions do not necessarily mean that the device (for example, the terminal device or the network device) performs a determining action during implementation, and do not mean any other limitation.

This application describes a plurality of embodiments in detail with reference to a plurality of flowcharts. However, it should be understood that the flowcharts and related descriptions of corresponding embodiments thereof are merely examples for ease of understanding, and shall not constitute any limitation on this application. Each step in each flowchart does not necessarily need to be performed. For example, some steps may be skipped. In addition, an execution sequence of each step is not fixed, and is not limited to that shown in the figure. The execution sequence of each step is determined based on a function and internal logic of the step.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

**1.** A communication method, comprising:

determining, by a first terminal apparatus, first channel occupancy time COT;

determining, by the first terminal apparatus, to share a first resource based on a preset priority threshold, wherein a time domain position of the first resource is in the first COT, and a priority of data on the first resource is higher than or equal to the priority threshold; and

sending, by the first terminal apparatus, first indication information to at least one second terminal apparatus, wherein the first indication information is for sharing the first COT, and the first indication information comprises one or more of the priority threshold, resource information of the first COT, and sharing and licensing information of a PSFCH resource in the first COT.

2. The method according to claim 1, wherein before determining, by the first terminal apparatus, the first channel occupancy time COT, the method further comprises:

receiving, by the first terminal apparatus, second indication information from the second terminal apparatus, wherein the second indication information indicates a second resource, the second resource is a resource reserved by the second terminal apparatus for sending data, a time domain position of the second resource is in the first COT, and the first resource is comprised in the second resource.

3. The method according to claim 2, wherein the first indication information comprises at least one first identifier, each first identifier is in a one-to-one correspondence with a second terminal apparatus that reserves the first resource, and the first identifier indicates that a resource in the first COT is shared with a corresponding second terminal apparatus.

4. The method according to claim 3, wherein a quantity of first identifiers is determined based on a quantity of second terminal apparatuses that reserve the first resource.

5. The method according to any one of claims 1 to 4, wherein the sharing and licensing information of the PSFCH in the first COT is 1-bit and indicates a third terminal apparatus to use the PSFCH resource in the first COT, and the third terminal apparatus is comprised in the at least one second terminal apparatus, wherein

the third terminal apparatus is a data receiving apparatus of the first terminal apparatus, and/or a terminal apparatus corresponding to the first identifier.

6. The method according to any one of claims 1 to 4, wherein the sharing and licensing information of the PSFCH in the first COT is multi-bit, and indicates one of the following:

indicating a third terminal apparatus to use the PSFCH resource in the first COT, wherein the third terminal apparatus is comprised in the at least one second terminal apparatus, and the third terminal apparatus is a data receiving apparatus of the first terminal apparatus, and/or a terminal apparatus corresponding to the first identifier;

indicating a data receiving apparatus of a terminal apparatus corresponding to the first identifier to use the PSFCH resource in the first COT; or

indicating that the third terminal apparatus cannot use the PSFCH resource in the first COT.

7. The method according to any one of claims 1 to 6, wherein the priority threshold is one of the following:

a highest priority in at least one piece of to-be-sent data in the first COT;

a lowest priority of to-be-sent data in the first COT; or

a priority of data sent in a $1^{st}$ time unit of the first COT.

8. The method according to any one of claims 1 to 7, wherein the first indication information is carried in sidelink control information SCI, or the first indication information is carried in a medium access control control element MAC CE.

9. A communication method, comprising:

receiving, by a second terminal apparatus, first indication information from a first terminal apparatus, wherein the first indication information indicates that first channel occupancy time COT is shared, and the first indication information comprises one or more of a priority threshold, resource information of the first channel occupancy time COT, and sharing and licensing information of a PSFCH resource in the first COT; and

determining, by the second terminal apparatus, to use a third resource based on the priority threshold, wherein a time domain position of the third resource is in the first COT, and a priority of data on the third resource is higher than or equal to the priority threshold.

10. The method according to claim 9, wherein before receiving, by the second terminal apparatus, the first indication information from the first terminal apparatus, the method further comprises:
sending, by the second terminal apparatus, second indication information to the first terminal apparatus, wherein the second indication information indicates a second resource, the second resource is a resource reserved by the second terminal apparatus for sending data, a time domain position of the second resource is in the first COT, and the third resource is comprised in the second resource.

11. The method according to claim 7 or 8, wherein the first indication information comprises a first identifier, and the first identifier indicates that a resource in the first COT is shared with the second terminal apparatus.

12. The method according to claim 11, wherein the sharing and licensing information of the PSFCH in the first COT is 1-bit or multi-bit, and indicates the second terminal apparatus to use the PSFCH resource in the first COT.

13. The method according to any one of claims 9 to 12, wherein the first indication information is carried in sidelink control information SCI, or the first indication information is carried in a medium access control control element MAC CE.

14. A communication method, comprising:

determining, by a first terminal apparatus, second channel occupancy time COT; and
sending, by the first terminal apparatus, third indication information to at least one second terminal apparatus, wherein the third indication information indicates a shared fourth resource, a time domain position of the fourth resource is in the second COT, the third indication information comprises at least one resource indication value RIV and/or sharing and licensing information of a PSFCH in the second COT, and each RIV is in a one-to-one correspondence with each fourth resource, wherein
the RIV indicates a time domain start position t1 and a time domain end position t2 of the corresponding fourth resource; or
the RIV indicates a time domain start position t1 and a length L of the corresponding fourth resource.

15. The method according to claim 14, wherein before determining, by the first terminal apparatus, the second COT, the method further comprises:
receiving, by the first terminal apparatus, fourth indication information from the second terminal apparatus, wherein the second indication information indicates a fifth resource, the fifth resource is a resource reserved by the second terminal apparatus for sending data, a time domain position of the fifth resource is in the second COT, and the fifth resource is comprised in the fourth resource.

16. The method according to claim 15, wherein the third indication information comprises at least one second identifier, each second identifier is in a one-to-one correspondence with a second terminal apparatus that reserves the fourth resource, and the second identifier indicates that a resource in the second COT is shared with a corresponding second terminal apparatus.

17. The method according to claim 16, wherein a quantity of second identifiers is determined based on a quantity of second terminal apparatuses that reserve the fourth resource.

18. The method according to claim 17, wherein the sharing and licensing information of the PSFCH in the second COT is 1-bit and indicates whether a third terminal apparatus can use the PSFCH resource in the second COT, and the third terminal apparatus is comprised in the at least one second terminal apparatus, wherein
the third terminal apparatus is a data receiving apparatus of the first terminal apparatus, and/or a second terminal apparatus corresponding to the second identifier.

19. The method according to claim 17, wherein the sharing and licensing information of the PSFCH in the second COT is multi-bit, and indicates one of the following:

indicating a third terminal apparatus to use the PSFCH resource in the second COT, wherein the third terminal apparatus is comprised in the at least one second terminal apparatus, and the third terminal apparatus is a data receiving apparatus of the first terminal apparatus, and/or a second terminal apparatus corresponding to the second identifier;
indicating a data receiving apparatus of a terminal apparatus corresponding to the second identifier to use the PSFCH resource in the second COT; or

indicating that the third terminal apparatus cannot use the PSFCH resource in the second COT.

20. The method according to any one of claims 14 to 19, wherein

when t2-t1≤19, RIV=39(t2-t1)+N+t1; or
when 20≤t2-t1≤39, RIV=39(39-t2+t1)+41+N-t1, wherein 0≤N≤244.

21. The method according to any one of claims 14 to 19, wherein

when L≤19, RIV=39(L-1)+t1-1; or
when 20≤L≤39, RIV=39(40-L)+t1.

22. The method according to any one of claims 15 to 19, wherein the third indication information is carried in sidelink control information SCI, or the third indication information is carried in a medium access control control element MAC CE.

23. A communication method, comprising:

receiving, by a second terminal apparatus, third indication information, wherein the third indication information is for sharing a fourth resource, and the third indication information comprises at least one resource indication value RIV and/or sharing and licensing information of a PSFCH in second COT, wherein
the RIV indicates a time domain start position t1 and a time domain end position t2 of the fourth resource; or
the RIV indicates a time domain start position t1 and a length L of the fourth resource; and
using, by the second terminal apparatus, the fourth resource based on the third indication information.

24. The method according to claim 23, wherein the sharing and licensing information of the PSFCH in the second COT is 1-bit or multi-bit, and indicates the second terminal apparatus to use the PSFCH resource in the second COT.

25. The method according to claim 23 or 24, wherein

when t2-t1≤19, RIV=39(t2-t1)+N+t1; or
when 20≤t2-t1≤39, RIV=39(39-t2+t1)+41+N-t1, wherein 0≤N≤244.

26. The method according to claim 23 or 24, wherein

when L≤19, RIV=39(L-1)+t1-1; or
when 20≤L≤39, RIV=39(40-L)+t1.

27. The method according to any one of claims 23 to 26, wherein the third indication information is carried in sidelink control information SCI, or the third indication information is carried in a medium access control control element MAC CE.

28. A communication apparatus, comprising:

a unit configured to implement the method according to any one of claims 1 to 8 and 14 to 22; or
a unit configured to implement the method according to any one of claims 9 to 13 and 23 to 27.

29. A communication system, comprising a first terminal apparatus and a second terminal apparatus, wherein

the first terminal apparatus is configured to implement the method according to any one of claims 1 to 8 and 14 to 22; and
the second terminal apparatus is configured to implement the method according to any one of claims 9 to 13 and claims 23 to 27.

30. A computer-readable storage medium, wherein the computer-readable storage medium stores a computer program, and when the computer program is run,

an apparatus is enabled to perform the method according to any one of claims 1 to 8 and 14 to 22, or

an apparatus is enabled to perform the method according to any one of claims 9 to 13 and 23 to 27.

31. A communication apparatus, wherein the apparatus comprises one or more processors and a memory, and the processor is configured to execute a computer program or instructions stored in the memory, to enable the communication apparatus to perform the method according to any one of claims 1 to 8 and 14 to 22, or to perform the method according to any one of claims 9 to 13 and 23 to 27.

32. A chip system, comprising a memory and a processor, wherein the memory is configured to store a computer program, and the processor is configured to invoke the computer program from the memory and run the computer program,

to enable a communication apparatus on which the chip system is installed to perform the method according to any one of claims 1 to 8 and 14 to 22; or
to enable a communication apparatus on which the chip system is installed to perform the method according to any one of claims 9 to 13 and 23 to 27.

FIG. 1

(a)

(b)

(c)

(d)

FIG. 2

V2V

V2P

V2I/V2N

FIG. 3

FIG. 4

| Bitmap | | | | Bitmap (repeated) | | | ... | Bitmap (repeated) | |
|---|---|---|---|---|---|---|---|---|---|
| Slot 0 | Slot 1 | ... | Slot 7 | Slot 8 | Slot 9 | ... Slot 15 | Slot 16 | ... | Slot N |

FIG. 5

Bitmap: 11001110

Subframe used for sidelink transmission

Normal subframe

Sequence number of a start resource block

Spectrum

Subchannel 1 — $n_{CH}$

Subchannel 2 — $n_{CH}$

...

Subchannel N — $n_{CH}$

FIG. 6

| | |
|---|---|
| Interlace #1 | |
| Interlace #2 | |
| | |
| Interlace #1 | |
| Interlace #2 | |
| | |
| Interlace #1 | |
| Interlace #2 | |
| | |

20 MHz

RB index

| | |
|---|---|
| Interlace #1 | |
| Interlace #2 | |
| | |
| Interlace #1 | |
| Interlace #2 | |
| | |
| Interlace #1 | |
| Interlace #2 | |
| | |

20 MHz

20 MHz

RB index

(a)

| |
|---|
| RB #1 |
| RB #2 |
| RB #3 |
| ... |
| RB #8 |
| RB #9 |
| RB #10 |
| |

20 MHz

Subchannel

RB index

(b)

FIG. 7

FIG. 8

K=2

Resource
pool

| | 0 | 1 | 2 | 3 | ▨ | 4 | 5 | 6 | 7 | ▨ |

One SL
transmission slot

PSSCH bundling
window length

☐ PSSCH  ▨ PSFCH

FIG. 9

FIG. 10

| Subchannel 1 | Set 1 |
| Subchannel 2 | Set 2 |
| Subchannel 3 | Set 3 |
| Subchannel 4 | Set 4 |
| Subchannel 5 | Set 5 |
| Subchannel 6 | Set 6 |
| Subchannel 7 | |

FIG. 11

FIG. 12

FIG. 13

Type 1 LBT | UE 1→UE 2 | UE 1→UE 2 | UE 1→UE 2 | UE 1→UE 2 | UE 2→UE 1 | UE 3→UE 1

n−1 | n | n+1 | n+2 | n+3 | n+4 | n+5

COT indication

Initial COT of UE 1

FIG. 14

FIG. 15

FIG. 16

FIG. 17

FIG. 18

200

| UE 1 | | UE 2 | UE 3 |
|------|--|------|------|

S201: Preempt COT #2

S202: Third indication information

S203: Use, based on the third indication information, a resource shared by the UE 1 in the COT #2

S203: Use, based on the third indication information, a resource shared by the UE 1 in the COT #2

FIG. 19

Frequency
domain

Resource
#A

Resource
#A

t1

t2

Time
domain

Start position of
shared COT

End position of the
shared COT

(a)

Frequency
domain

$t_2$

$t_4$

Resource
#C

Resource
#B

Resource
#C

Resource
#B

$t_1$

$t_3$

Time
domain

(b)

FIG. 20

FIG. 21

Frequency
domain

End position of
the shared COT — Resource #E

$n_{subCH,1}$

Start position
of shared COT — Resource #E

Time
domain

FIG. 22

300

| Fifth terminal apparatus | | Sixth terminal apparatus |

S301: Preempt COT #4

S302: Sixth indication information

S303: Determine, based on the sixth indication information, whether an idle symbol in a time unit is padded with data

FIG. 23

FIG. 24

FIG. 25

FIG. 26

## INTERNATIONAL SEARCH REPORT

| International application No. |
| --- |
| **PCT/CN2024/084059** |

| A. | CLASSIFICATION OF SUBJECT MATTER |
| --- | --- |

H04W 72/25(2023.01)i

According to International Patent Classification (IPC) or to both national classification and IPC

| B. | FIELDS SEARCHED |
| --- | --- |

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT, CNKI, VEN, ENTXT, 3GPP: 信道占用时间, 共享, 分享, 共用, 优先级, 阈值, 时长, 长度, 位置, COT, channel occupancy time, share, priority, threshold, time, length, position

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 114424640 A (QUALCOMM INC.) 29 April 2022 (2022-04-29) description, paragraphs 37-182, and figures 1-13 | 1-32 |
| A | CN 115002787 A (HEFEI YIRUI COMMUNICATION TECHNOLOGY CO., LTD.et al.) 02 September 2022 (2022-09-02) entire document | 1-32 |
| A | CN 115868227 A (QUALCOMM INC.) 28 March 2023 (2023-03-28) entire document | 1-32 |
| A | US 2023064680 A1 (ASUSTEK COMPUTER INC.) 02 March 2023 (2023-03-02) entire document | 1-32 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **28 June 2024** | **28 June 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| CN | 114424640 | A | 29 April 2022 | EP | 4035468 | A1 | 03 August 2022 |
| | | | | US | 2021092783 | A1 | 25 March 2021 |
| | | | | US | 11672034 | B2 | 06 June 2023 |
| | | | | WO | 2021061880 | A1 | 01 April 2021 |
| CN | 115002787 | A | 02 September 2022 | | None | | |
| CN | 115868227 | A | 28 March 2023 | US | 2021400732 | A1 | 23 December 2021 |
| | | | | US | 11812474 | B2 | 07 November 2023 |
| | | | | EP | 4169324 | A1 | 26 April 2023 |
| | | | | WO | 2021257209 | A1 | 23 December 2021 |
| US | 2023064680 | A1 | 02 March 2023 | KR | 20230025366 | A | 21 February 2023 |

Form PCT/ISA/210 (patent family annex) (July 2022)

**EP 4 694 501 A1**

**Patent documents cited in the description**

- CN 202310384427

- CN 202310541161